(19) Europäisches Patentamt
European Patent Office
Office européen des brevets

(11) **EP 3 420 567 B1**

(12) **EUROPÄISCHE PATENTSCHRIFT**

(45) Veröffentlichungstag und Bekanntmachung des Hinweises auf die Patenterteilung:
**21.08.2024 Patentblatt 2024/34**

(21) Anmeldenummer: **17707287.3**

(22) Anmeldetag: **24.02.2017**

(51) Internationale Patentklassifikation (IPC):
**H01M 8/02** *(2016.01)*

(52) Gemeinsame Patentklassifikation (CPC):
**H01B 17/305;** H01M 8/02; H01M 2250/20;
Y02E 60/50; Y02P 70/50; Y02T 90/40

(86) Internationale Anmeldenummer:
**PCT/EP2017/054329**

(87) Internationale Veröffentlichungsnummer:
**WO 2017/144661 (31.08.2017 Gazette 2017/35)**

(54) **DURCHFÜHRUNGEN FÜR ANWENDUNGEN BEI HOHEM AUSSENDRUCK SOWIE VERFAHREN ZU DEREN HERSTELLUNG**

FEED-THROUGHS FOR APPLICATIONS UNDER HIGH EXTERNAL PRESSURE, AND METHOD FOR THE PRODUCTION THEREOF

TRAVERSÉES POUR APPLICATIONS À PRESSION EXTÉRIEURE ÉLEVÉE ET PROCÉDÉ POUR LES PRODUIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.02.2016 DE 102016103485**

(43) Veröffentlichungstag der Anmeldung:
**02.01.2019 Patentblatt 2019/01**

(73) Patentinhaber: **SCHOTT AG**
**55122 Mainz (DE)**

(72) Erfinder:
• **SUTTNER, Jürgen**
**84163 Marklkofen (DE)**

• **FINK, Thomas**
**84034 Landshut (DE)**

(74) Vertreter: **Blumbach · Zinngrebe Patentanwälte PartG mbB**
**Alexandrastraße 5**
**65187 Wiesbaden (DE)**

(56) Entgegenhaltungen:
**EP-A1- 1 050 912       WO-A1-2012/167921**
**DE-A1- 1 490 333       DE-A1- 102011 001 985**
**US-A- 5 861 577**

EP 3 420 567 B1

**Beschreibung**

Die Erfindung betrifft Durchführungen für Anwendungen bei hohem Aussendruck sowie Verfahren zu deren Herstellung.

Für eine Vielzahl von Anwendungen werden Durchführungen eingesetzt, die hohem Aussendruck sicher standzuhalten haben. Insbesondere wenn diese Durchführungen auf einer Seite in Kontakt mit Fluiden kommen, die unter hohem Druck stehen, ist deren betriebssicherer Einsatz und deren Dauerbetriebsfestigkeit von großer, auch sicherheitstechnischer Bedeutung. Diese Anwendungen umfassen Einrichtungen in der Tiefsee, wie beispielsweise - und Explorationseinrichtungen, d.h. in der Erforschung und/oder Förderung insbesondere von Öl- und/oder Gasvorkommen, oder auch deren Einsatz in chemisch oder strahlungsbelasteten Umgebungen, wie beispielsweise in der chemischen Industrie oder in der Energieanlagen- und Reaktortechnik. Weitere Anwendungen umfassen beispielsweise auch bemannte und unbemannte Wasserfahrzeuge, beispielsweise Tauchroboter und U-Boote sowie spezielle Gastanks, wie $CO_2$-Lager oder LNG-Tanks (Liquid Natural Gas, auch Flüssiggas genannt) oder $H_2$-Tanks, insbesondere für Kraftfahrzeuge mit Brennstoffzellen, welche z.B. eine Druckfestigkeit von 700 bar benötigen.

In US 4,797,117 werden Verbinder mit einer Gummiummantelung offenbart, innerhalb welcher durch Pressung mittels eines kegelförmige Öffnungen aufweisenden Elements im Querschnitt keilförmige Dichtlippenringe an einen isolierten Leiter dichtend angelegt werden. Dieser Aufbau des Verbinders soll insbesondere eine Vor-Ort-Installation sowie dessen Reparatur ermöglichen.

EP 1050912 bezieht sich allgemein auf die Umwandlung chemischer Energie in elektrische Energie und insbesondere auf eine elektrochemische Alkalimetall-Zelle oder eine wiederaufladbare elektrochemische Lithiumionen-Zelle. D1 offenbart insbesondere in Fig. 4-5 eine geometrische Lösung ähnlich der ringförmigen Mutter der vorliegenden Anmeldung. Ein Hauptunterschied besteht darin, dass die Mutter von D1 nicht zur Komprimierung des Isolationsmaterials beiträgt, sondern dazu dient, den Deckel (Element 28) bei Überdruck in der Zelle zu biegen.

US 2006/0179950 A1 zeigt eine Gehäusedurchführung für eine einen Drucksensor umfassende Komponente, mit einer im Querschnitt im Wesentlichen keilförmigen Fluidringdichtung, welche die Komponente dichtend innerhalb einer kegelstumpfförmigen Öffnung des Gehäuses umgibt. Um ein einfacheres Herstellungsverfahren anzugeben, wird vorgeschlagen, die keilförmige Fluidringdichtung mit so hohen Kräften einzubringen, dass zumindest die elastische Verformungsgrenze entweder des Gehäuses oder der Komponente überschritten wird.

DE 10 2006 054 843 A1 offenbart eine elektrische Durchführung, insbesondere für Druckanwendungen, mit einem Gehäusedurchlass zumindest im Bereich eines ersten Gehäuseendes, bei welcher die mit dem Druck belastete Gehäuseseite wenigstens zwei Mündungen an einem Abschnitt der Gehäuseaußenfläche bildet. Die wenigstens zwei Mündungen sind dabei bevorzugt flächengleich oder im Wesentlichen flächengleich ausgebildet. Die wenigstens zwei Mündungen sind weiterhin in gleichmäßigen Winkelabständen um die Gehäuseachse versetzt, und zwar bevorzugt derart, dass sich die Achsen der Mündungen und damit auch die Kraftlinien der aus dem Druck an der Druckseite resultierenden Kräfte in einem gemeinsamen Punkt schneiden, vorzugsweise zusammen mit der Gehäuseachse. Durch diese Ausbildung soll sich bei Druckanwendungen eine Kompensation der auf die Mündungen einwirkenden Drücke ergeben. Nachteilig ist bei dieser Durchführung, dass die durch Druckbeaufschlagung entstehenden Kräfte durch das den jeweiligen Leiter umgebende Isolationsmaterial hindurch geleitet werden und nur paarweise mit jeweils zwei Leitern eine Kompensation erreicht werden kann. Ferner sind bei dieser Anordnung die jeweiligen Leiter um 90° abgeknickt innerhalb einer Gehäuseöffnung geführt, welches nicht nur die Herstellung erschwert, sondern auch die Geometrie der Leiterführung verkompliziert. Darüber hinaus sind die geometrischen Abmessungen um ein vielfaches platzaufwändiger als es bei einer geraden Leiterführung nötig wäre.

In WO 2012/167921 A1 wird eine Durchführung für ein Batteriegehäuse beschrieben, in welchem ein Grundkörper in ein Gehäuse eingeschweißt wird. Um thermische und/oder Druckbelastung von der Einglasung des Leiters fern zu halten befindet sich im Grundkörper eine Nut an der Grenze zum Gehäuse, welche beim Einschweißen ähnlich eine Kühlfinne eines Kühlkörpers wirken soll. Beim Durchgehen von Batterien ist die Durchführung insbesondere thermischen Belastungen ausgesetzt. Die auftretenden Drücke spielen für die Durchführung eine untergeordnete Rolle, da üblicherweise zuvor die Gehäuse aufreißen. Daher soll bei den gezeigten Durchführungen außerdem über den gesamten Betriebsbereich eine Druckeinglasung sichergestellt sein, weshalb sich der Großteil des Materials des Grundkörpers zwischen Nut und Einglasung befindet. Beim Einwirken eines Aussendrucks soll dieser insbes. von der Einglasung ferngehalten werden.

DE 14 90 508 A beschreibt eine vakuumdichte elektrische Durchführung für hohe Strombelastung, welche über eine ringförmige Ausnehmung, die in einem ebenfalls ringförmigen Flansch angeordnet ist, verfügt. Diese ringförmige Ausnehmung ist elastisch ausgebildet, um eine thermisch bedingte Ausdehnung eines aus einem Kupferbolzen bestehenden Leiters aufzunehmen. Bedingt durch die hierbei zwingend vorgegebene Verformbarkeit der ringförmigen Ausnehmung ist diese nicht für die Verwendung bei hohen Außendrücken geeignet. Gleiches gilt für den mit seitlichem Spiel innerhalb eines aus Chromstahl bestehenden Rohrs gehaltenen Kupferbolzen. Auch hier befindet sich ein Großteil des Materials des Grundkörpers zwischen Nut und Einglasung.

DE 2 263 222 A offenbart eine einschweißbare elektrische Druckglasdurchführung für vakuum- bzw. druckdicht verschlossene Behälter, welche eine Vielzahl von Druckglasdurchführungen aufweist, die von einer benachbart zu einer Schweißlippe angeordneten radialen Nut umgeben sind. Da bezogen auf eine axiale Mittellinie dieser Durchführung Druckglasverbindungen radial hintereinander angeordnet sind, kann diese Nut nicht als Druckkompensationseinrichtung wirken und somit nicht die Druckfestigkeit dieser Durchführung gegenüber hohen Aussendrücken verbessern. Gleiches gilt für die in DE 1 490 333 A gezeigte gasdichte Durchführung für zwei 3-phasige Leitersysteme mit je einem Nullleiter, insbesondere da sich auch hier ein Großteil des Materials des Grundkörpers zwischen Nut und Einglasung befindet.

US 4 213 004 B ist eine gasdichte, in einer Kovardurchführung angeordnete Verbindung zu entnehmen, bei welcher ein aus Kovar bestehender Zylinder mit seitlichem Spiel innerhalb einer Aluminium-Schweißlippe durch eine Elektronenstrahlverschweißung gehalten ist. Die Schweißlippe ist dazu ausgestaltet, um die Verschweißbarkeit eines Aluminiumflansches mit einer Kovarhülse mit Hilfe einer Nickel-Verbindungslinie bereitzustellen. Diese Durchführung kann keinen hohen Drücken standhalten.

Die vakuumdichte Durchführung der DE 16 65 564 A, bei der ein elektrisch leitender Bolzen von einem hohlzylindrischen Isolierkörper umgeben ist, weist einen aussendruckseitigen Kragen auf, welcher den elektrisch leitenden Bolzen umgibt, sich jedoch trichterförmig zur Außenseite hin so öffnet, dass unter erhöhtem Druck stehende Fluide dazu tendieren zwischen diesen Kragen und dem elektrisch leitenden Bolzen einzudringen.

Aus dem Stand der Technik ist auch bekannt, Einglasungen von Leitern in Grundkörpern vorzunehmen, die vorgefertigt und dann mit einem Gehäuse durch thermische Verfahren verbunden werden, beispielsweise durch Einschweißen. Dabei wird eine thermische Überlastung der Einglasung durch Entlastungseinrichtungen im Grundkörper vermieden, wobei diese Entlastungseinrichtungen lokal die Oberfläche des Grundkörpers vergrößern und so als Kühlkörper vor der Einglasung fungieren. Ebenso können solche Entlastungseinrichtungen dazu dienen, beim Einschweißen des Grundkörpers durch thermische Ausdehnung des Gehäuses und/oder Grundkörpers entstehende Spannungen von der Einglasung fernzuhalten, damit diese nicht beschädigt wird. Dabei werden die bekannten Grundkörper so ausgelegt, dass der radial auf die Einglasung wirkende Druck unabhängig von der Umgebungstemperatur möglichst konstant gehalten wird oder zumindest in einem Maß reduziert wird, so dass eine niedrige Höchstgrenze nicht überschritten wird. Dazu befinden sich die Entlastungseinrichtungen in der Regel in der Nähe der Grenze des Grundkörpers zum Gehäuse, in sicherer Entfernung zur Einglasung. Solche Durchführungen sind in der Regel nicht dazu geeignet, hohen Außendrücken, insbesondere Drücken von mehr als 1000 bar, widerstehen zu können, da hierbei häufig eine Schwächung deren äußeren Flansches vorgenommen wird, ohne diese jedoch bezüglich eines höheren Aussendrucks zu kompensieren.

Bei der konstruktiven Auslegung der erfindungsgemäßen Durchführung wird die Breite der Druckkompensationseinrichtung, insbesondere der ringförmigen Nut vorteilhaft so ausgelegt, dass diese möglichst schmal sein soll. Die erreichbare Breite der Druckkompensationseinrichtung hängt vor allem von dem Herstellungsprozess ab. Beim Erodieren können Nutbreiten von etwa 1 mm und weniger erreicht werden. Beim Fräsen sind üblicherweise einige wenige Millimeter erreichbar. Die Breite (ihre radiale Erstreckung $B_N$) der Druckkompensationseinrichtung kann somit sehr schmal ausfallen und dennoch alle positiven Wirkungen zeigen, da immer noch radial einwirkende, druckfestigkeitssteigernde Kräfte in gleicher Weise entstehen. Somit kann aber die Einwirkung der Druckkräfte auf den Grundkörper durch eine geringere Breite $B_N$ der Nut vermindert werden, denn diese Kräfte steigen proportional mit der Größe der Bodenfläche der jeweiligen ringförmigen Nut. Folglich wird eine breitere Nut bei gleichem Innendurchmesser proportional zum Quadrat von deren Außendurchmesser und somit mit zunehmender Breite $B_N$ der Nut die Durchführung weniger druckfest werden lassen, wenn dieser Aussendurchmesser zunimmt, welches bei breiter werdenden Nuten mit einer Erhöhung der Dicke des Grundkörpers kompensiert wird.

Hierbei ist das unter der ringförmigen Nut, den sacklochartigen Öffnungen oder dem hervorkragenden Abschnitt verbleibende Material so dimensioniert, dass dieses den im Betriebszustand auftretenden Aussendrücken jeweils sicher standhält.

Für bevorzugte Ausführungsformen ist das Volumen des Materials zwischen der Nut und dem Isolationsmaterial sehr viel kleiner als das Volumen des Materials des Grundkörpers zwischen der Nut und dem Aussenrand der Durchführung, insbesondere wenn die Durchführung zur späteren Montage in weitere Baugruppen eingeschweisst werden soll.

Mit der Erfindung sollen Durchführungen bereitgestellt werden, in welchen auf einfache Weise auch einzelne, beispielsweise Leiter umfassende funktionale Elemente sicher und dauerbetriebsfest, auch bei hohen Drücken fluiddicht gehalten sind. Unter hohen Drücken sind im Rahmen der vorliegenden Offenbarung insbesondere Drücke von mehr als 1000 bar zu verstehen, vorteilhaft insbesondere auch Drücke von mehr als 1500 bar oder mehr als 2000 bar. Ferner ist es vorteilhaft, wenn hierbei komplexe Führungsgeometrien für beispielsweise Leiter umfassende funktionale Elemente vermieden werden können. Weiterhin vorteilhaft ist es, wenn platzaufwändige Geometrien vermieden und mehrere funktionale Elemente nebeneinander in der Durchführung angeordnet werden können.

Hierzu gibt die Erfindung eine Durchführung gemäß Anspruch 1 an.

Bei den bevorzugten Ausführungsformen erstrecken sich die Randbereiche vorzugsweise schräg oder parallel zur Längsachse der zumindest einen Durchgangsöffnung.

Besonders vorteilhaft ist die fluiddichte Verbindung ebenfalls hermetisch dicht, d.h. die Heliumleckrate beträgt weniger als $1 \times 10^{-3}$ mbar*l/sec bei 1 bar Druckdifferenz innerhalb des Betriebsdrucksbereichs.

Die Erfindung gibt auch eine Durchführung an, insbesondere für Anwendungen bei hohem Außendruck, an mit einem Grundkörper sowie zumindest einer sich durch den Grundkörper hindurch erstreckenden Durchgangsöffnung, und zumindest einem Funktionselement, wobei das zumindest eine Funktionselement innerhalb der zumindest einen Durchgangsöffnung angeordnet ist, wobei das zumindest eine Funktionselement mit dem Grundkörper fluiddicht verbunden ist, vorzugsweise mit einem das Funktionselement zumindest bereichsweise umgebenden und vorzugsweise die fluiddichte Verbindung herstellenden Isolationsmaterial, und mit einer ringförmige Nut im Material des Grundkörpers, welche vorzugsweise symmetrisch zur Durchgangsöffnung angeordnet ist und/oder mit Öffnungen, vorzugsweise sacklochartigen Öffnungen im Material des Grundkörpers, welche vorzugsweise symmetrisch zur Durchgangsöffnung, insbesondere mit deren Längsachse auf einem die Durchgangsöffnung umgebenden Vollkreis, angeordnet sind und/oder mit einem hervorkragenden Abschnitt des Grundkörpers, welcher vorzugsweise symmetrisch zur Durchgangsöffnung angeordnet ist.

Bei den bevorzugten Ausführungsformen wird bei im Betriebszustand anliegendem Druck ein am Isolationsmaterial anliegenden Randwall der Druckkompensationseinrichtung senkrecht zur Richtung der Achse der Durchgangsöffnung gedrückt, wobei dabei bevorzugt eine vom Betriebszustand, insbesondere vom Aussendruck abhängige Klemmkraft auf das Isoliermaterial entsteht.

Bei einer bevorzugten Ausführungsform ist die Druckkompensationseinrichtung als am Isolationsmaterial anliegender Randwall ausgebildet und werden durch im Betriebszustand anliegenden Druck zumindest Bereiche des Randwalls senkrecht zur Richtung der Achse der Durchgangsöffnung gedrückt, wobei dabei eine vom Betriebszustand, insbesondere vom Aussendruck, abhängige Klemmkraft auf das Isoliermaterial entsteht.

Um die funktionale Vielfalt der Verwendungsmöglichkeiten des Funktionselements stärker zu betonen, ist dieses im Rahmen der vorliegenden Offenbarung nicht nur als Funktionselement, sondern abwechselnd auch als funktionales Element bezeichnet.

In überraschender Weise konnte durch diese Maßnahmen die Verbindung zwischen dem Grundkörper und dem Funktionselement, insbesondere die Verbindung des Isolationsmaterials mit dem Grundkörper, gegenüber einer Durchführung ohne Druckkompensationseinrichtung, insbesondere Außendruckkompensationseinrichtung, um 20 %, bevorzugt um 50 % und am bevorzugtesten um 100% erhöhten Betriebsdrucken fluiddicht standhalten. In gleicher Weise konnte hierdurch die Druckfestigkeit der Durchführung um vorzugsweise 20 %, bevorzugter um 50 % und am bevorzugtesten um 100% oder sogar um mehr als 100 % erhöht werden.

Insbesondere ist eine erfindungsgemäße Durchführung in der Lage, Außendrücken von mehr als 1000 bar zu widerstehen. Die Erfinder haben erkannt, dass das eines der Funktionsprinzipien der Erfindung vereinfacht ausgedrückt darauf beruht, dass im Betriebszustand oder Störfall der auf die Durchführung wirkende Außendruck dazu verwendet wird, die Einglasung selbst in der Durchgangsöffnung zu stabilisieren. Die Druckkompensationseinrichtung ist so eingerichtet, dass der auf sie wirkende Druck radial, somit senkrecht zu einer Längs- oder Symmetrieachse einer Durchgangsöffnung der Durchführung, auf das Isolationsmaterial wirkt und so mit steigendem Druck eine steigende Klemmwirkung auf das Isolationsmaterial ausgeübt wird, welche vorteilhaft einem Aufbiegen der Durchgangsöffnung entgegen wirken kann. Dazu muss das Material des Grundkörpers zumindest im Bereich der Druckkompensationseinrichtung durch den Druck verformbar sein, insbesondere elastisch verformbar, vorteilhaft reversibel elastisch verformbar. Parameter für die Ausgestaltung der Druckkompensationseinrichtung können dabei neben der Materialauswahl selbst die verbleibende Materialstärke zwischen der Druckkompensationseinrichtung und dem Isolationsmaterial sein, aber auch die Tiefe der Druckkompensationseinrichtung gemessen parallel zur Achse der Durchgangsöffnung. Sehr vereinfacht ausgedrückt nutzen die Erfinder die überraschende Erkenntnis, dass eine Schwächung des Materials des Grundkörpers durch die Druckkompensationseinrichtung zu einer Erhöhung der Druckfestigkeit der Durchführung führt.

Ebenso möglich ist der Einsatz in Maschinen wie z.B. Wasserstrahlschneidemaschinen, Pressen, hydraulischen Anlagen, Common Rail Einspritzanlagen und ähnlichen Anwendungen, bei welchen hohe Drücke von Fluiden auftreten, insbesondere auf einer Seite einer Durchführung auftreten. Insbesondere ermöglicht es die Erfindung auch, Sensoren und/oder Aktuatoren sowie jegliche weiteren insbesondere elektrischen Verbraucher und/oder Erzeuger in Umgebungen mit hohen Drücken mit anderen Gerätschaften verbindbar zu machen.

Höchst überraschend haben die Erfinder auch herausgefunden, dass in einer weiteren bevorzugten Ausführungsform die Breite der Nut zunehmen kann, insbesondere sogar so weit in radialer Richtung zunehmen kann, dass sich durch den Abtrag des Materials dabei keine Nut mehr, sondern stattdessen eine Freifläche ergibt, welche sich dann vor einem hervorkragenden Abschnitt in lateraler, somit radial nach außen verlaufender Richtung erstreckt. Statt der Innenwand der ringförmigen Nut wird somit dann bei dieser abgewandelten Ausführungsform ein hervorkragender Abschnitt mit einer Außenwand ausgebildet, wobei die Außenwand des hervorkragenden Abschnitts dann funktional im Wesentlichen gleich wirkt wie die Innenwand der Nut. Wegen dieser Gleichwirkung gelten die nachfolgend zur Innenwand der ringförmigen Nut vorgenommenen Aussagen jeweils auch für die Außenwand des hervorkragenden Abschnitts, insbesondere bei einer bis auf die Breite der Nut identischen Ausführungsform.

Bei der konstruktiven Auslegung einer solchen Durchführung mit Auskragung wird die Materialdicke des Grundkörpers im Bereich außerhalb der Auskragung so gewählt, dass der Grundkörper den erwarteten Drücken standhält. Dann wird ein eine Auskragung mit einer vergleichsweise geringen Wandstärke vorgesehen.

Für bevorzugte Ausführungsformen ist das Volumen des Materials des hervorkragenden Abschnitts sehr viel kleiner als das Volumen des Materials des Grundkörpers zwischen dem hervorkragenden Abschnitt und dem Aussenrand der Durchführung, insbesondere wenn die Durchführung zur späteren Montage in weitere Baugruppen eingeschweisst werden soll.

Die erfindungsgemäßen Durchführungen sind insbesondere dafür geeignet, mit Hilfe der Durchführung Bauteile und/oder Vorrichtungen miteinander verbindbar zu machen und/oder um Sensoren und/oder Aktuatoren zu betreiben. Da derartige Durchführungen vielfältig in vorteilhafter Weise verwendet werden können, insbesondere für Einrichtungen in der Tiefsee wie beispielsweise in einer Erdöl- und/oder Erdgasbohrungs- oder Explorationsvorrichtung, und/oder in chemisch oder strahlungsbelasteten Umgebungen, wie beispielsweise in der chemischen Industrie oder in der Energieanlagen- und Reaktortechnik, insbesondere in explosionsgefährdeten Bereichen, in einer Energieerzeugungs- oder Energiespeichervorrichtung mit einem Gehäuse, oder in einer Kapselung einer Energieerzeugungsvorrichtung oder einer Energiespeichervorrichtung oder eines Reaktors oder einer Speichervorrichtung von toxischer und/oder schädlicher Materie, insbesondere als Durchführungseinrichtung innerhalb des Containments eines Reaktors oder Durchführungseinrichtung durch das Containment eines Reaktors, insbesondere eines chemischen oder Kernreaktors, oder in einem Raumfahrzeug oder Raumfahrt-Erkundungsfahrzeug, oder in Tauchrobotern und oder bemannten oder unbemannten Tauchbooten, oder in einem Gehäuse eines Sensors und/oder Aktuators, kann der auf die Durchführung einwirkende Druck beispielsweise bei Reaktoren ein innerer Druck und bei anderen Anwendungen, beispielsweise in der Tiefsee, ein äußerer Druck, somit ein Außendruck sein. Folglich soll als druckzugewandte Seite des Grundkörpers diejenige Seite des Grundkörpers bezeichnet werden, auf welche der erhöhte Außen- oder Innendruck, folglich generell der erhöhte Druck einwirkt.

Vorteilhaft umfasst die Druckkompensationseinrichtung eine ringförmige Nut im Material des Grundkörpers, welche vorzugsweise symmetrisch zur zumindest einen Durchgangsöffnung auf der dem Druck, insbesondere dem Außendruck zugewandten Seite des Grundkörpers angeordnet ist.

In ebenfalls vorteilhafter Weise kann die Druckkompensationseinrichtung alternativ oder zusätzlich Öffnungen, vorzugsweise sacklochartige Öffnungen im Material des Grundkörpers umfassen, welche vorzugsweise symmetrisch zur zumindest einen Durchgangsöffnung, insbesondere mit deren Längsachse auf einem die Durchgangsöffnung umgebenden Vollkreis, auf der dem Druck, insbesondere dem Außendruck, zugewandten Seite des Grundkörpers angeordnet sind.

In weiterer vorteilhafter Ausgestaltung kann die Druckkompensationseinrichtung alternativ oder zusätzlich einen hervorkragenden Abschnitt des Grundkörpers umfassen, welcher vorzugsweise als ringförmige Erhebung symmetrisch zur Durchgangsöffnung auf der dem Druck, insbesondere dem Außendruck zugewandten Seite des Grundkörpers ausgebildet ist.

Bei einer ersten bevorzugten Ausführungsform erstreckt sich die Tiefe der ringförmigen Nut oder der sacklochartigen Öffnung bis zu derjenigen Tiefe, die in etwa in der Mitte der Tiefe des das funktionale Element umgebenden und die fluiddichte Verbindung herstellenden Isolationsmaterials liegt

oder

endet das dem Grundkörper nahe Ende des hervorkragenden Abschnitts in etwa auf der Hälfte der Höhe des vorzugsweise die fluiddichte Verbindung herstellenden Isolationsmaterials am Grundkörper.

Bei einer zweiten bevorzugten Ausführungsform erstreckt sich die Tiefe der ringförmigen Nut oder der sacklochartigen Öffnung bis zu derjenigen Tiefe, bei welcher das das funktionale Element umgebende und die fluiddichte Verbindung herstellende Isolationsmaterial beginnt, am Grundkörper anzuliegen

oder

endet das dem Grundkörper nahe Ende des hervorkragenden Abschnitts auf der Höhe am Grundkörper, wo das das funktionale Element umgebende und die fluiddichte Verbindung herstellende Isolationsmaterial beginnt, am Grundkörper anzuliegen.

Bei einer dritten bevorzugten Ausführungsform erstreckt sich die Tiefe der ringförmigen Nut oder der sacklochartigen Öffnung bis zu derjenigen Tiefe, bei welcher das das funktionale Element umgebende und die fluiddichte Verbindung herstellende Isolationsmaterial aufhört, am Grundkörper anzuliegen

oder

endet das dem Grundkörper nahe Ende des hervorkragenden Abschnitts auf der Höhe am Grundkörper, wo das das funktionale Element umgebende und die fluiddichte Verbindung herstellende Isolationsmaterial aufhört, am Grundkörper anzuliegen.

Bei einer vierten bevorzugten Ausführungsform erstreckt sich die Tiefe der ringförmigen Nut oder der sacklochartigen Öffnung über diejenige Tiefe hinaus, bei welcher das das funktionale Element umgebende und die fluiddichte Verbindung herstellende Isolationsmaterial aufhört, am Grundkörper anzuliegen

oder endet das dem Grundkörper nahe Ende des hervorragenden Abschnitts tiefer am Grundkörper als an der Stelle, an der das das funktionale Element umgebende und die fluiddichte Verbindung herstellende Isolationsmaterial aufhört, am Grundkörper anzuliegen.

Die Tiefe der ringförmigen Nut oder der sacklochartigen Öffnungen kann dazu genutzt werden, das Druckverhalten der Durchführung einzustellen. Insbesondere in der Ausführungsform, in der sich die Tiefe der ringförmigen Nut oder der sacklochartigen Öffnung bis zu einer Tiefe erstreckt, die im Bereich der des Isolationsmaterials liegt, d.h. deren Tiefe in einer Ebene senkrecht durch die Achse der Durchgangsöffnung liegt und mit der Ausdehnung des Isolationsmaterials entlang der Durchgangsöffnung überlappt, kann die Tiefe der Durchgangsöffnung die Druckbeständigkeit der Durchführung bei verschiedenen Außendrücken einstellbar gestalten. Prinzipiell gilt, je tiefer die ringförmige Nut oder der sacklochartigen Öffnung ist, desto höheren Drücken kann die Durchführung widerstehen. Allerdings geht die Beständigkeit bei hohen Drücken zu Lasten der Druck- oder Ausdrucksfestigkeit des Isolationsmaterials hin zu niedrigeren Drücken. Die gleiche Wirkung tritt auch bei den Ausführungsformen mit hervorragendem Abschnitt auf, bei welchen funktional die Erstreckung des hervorragenden Abschnitts in Richtung der Längsachse der Durchgangsöffnungen dann der Tiefe der Nut oder der sacklochartigen Öffnungen entspricht.

Liegt die Oberfläche des Isolationsmaterials auf der druckabgewandten Seite unterhalb der Ebene der Tiefe der ringförmigen Nut oder der sacklochartigen Öffnungen, die sich von der dem Druck zugewandten Seite in den Grundkörper erstrecken, so trägt dieser Bereich der Einglasungslänge zu der Ausdrucksfestigkeit und/oder Hermetizität der Durchführung insbesondere bei Drücken von weniger als 1000 bar bei. Der Bereich entlang der Einglasungslänge, der parallel zu der ringförmigen Nut oder den sacklochartigen Öffnungen verläuft, ist wie beschrieben dazu eingerichtet, bei anliegenden Drücken eine Klemmwirkung auf das Isolationsmaterial auszuüben. Dieser Bereich trägt dann zu der Dichtigkeit der Durchführung ab 1000 bar und mehr bei. Daher werden bevorzugt die Tiefe der ringförmigen Nut oder der sacklochartigen Öffnungen und die Einglasungslänge und/oder der Überlappungsbereich balanciert. Ein bevorzugter Kompromiss wird in dem Bereich erreicht, in dem die Tiefe der ringförmigen Nut oder der sacklochartigen Öffnungen oder eine Länge des hervorragenden Abschnitts in Richtung der Längsachse der Durchgangsöffnung in etwa der Hälfte der Einglasungslänge entspricht, mit Abweichungen nach oben oder unten von bevorzugt 30%, besonders bevorzugt 20%, insbesondere bevorzugt 10%. Als Einglasungslänge wird hierbei diejenige Länge bezeichnet, über welche sich das Isolationsmaterial innerhalb der jeweiligen Durchgangsöffnung in Längsrichtung der Durchgangsöffnung am Grundkörper, und vorzugsweise auch am funktionalen Element, anliegend erstreckt.

Besonders bevorzugt ist das funktionale Element ein elektrischer Leiter oder umfasst das funktionale Element einen elektrischen Leiter.

In weiterer vorteilhafter Ausgestaltung umfasst die Druckkompensationseinrichtung eine kreisförmige Ringnut und/oder Öffnungen, vorzugsweise sacklochartige Öffnungen im Material des Grundkörpers, welche vorzugsweise symmetrisch zur Durchgangsöffnung angeordnet sind und/oder umfasst einen hervorragenden Abschnitt des Grundkörpers, welcher vorzugsweise symmetrisch zur Durchgangsöffnung angeordnet ist.

Wenn das vorzugsweise die fluiddichte Verbindung herstellende Isolationsmaterial Glas und/oder glaskeramisches Material und/oder keramisches Material umfasst, und die Durchführung vorzugsweise eine Druckeinglasung umfasst, bei welcher das Glas und/oder das glaskeramisches Material und/oder das keramische Material mit dem Grundkörper und dem funktionalen Element jeweils zumindest bereichsweise fluiddicht verbunden ist, können hiermit hermetisch dichte und dauerbetriebsfeste Verbindungen verwirklicht werden.

Eine Druckeinglasung entsteht dann, wenn der thermische Ausdehnungskoeffizient des Materials des Grundkörpers größer ist als der des Materials des in die Durchgangsöffnung eingeschmolzenen Isolationsmaterials. In der klassischen Druckglasfertigung ist der thermische Ausdehnungskoeffizient des Funktionselements gleich oder kleiner als der thermische Ausdehnungskoeffizient des Isolationsmaterials. Eine leicht höhere thermische Ausdehnung ist zwar auch möglich, kann aber den Druck in der Einglasung, welchen das Isolationsmaterial in radialer Richtung auf das Funktionselement ausübt und damit die Druckbeständigkeit und Auszugsfestigkeit reduzieren. Mit der Nut oder dem hervorragenden Abschnitt kann nun ein Material für das Funktionselement mit höherer Dehnung ebenfalls verwendet werden, da der zusätzliche Druck durch das Isolationsmaterial an das funktionale Element weitergegeben wird und damit trotz einer bei herkömmlichen Ausführungsformen somit vorliegenden Fehlanpassung die Durchführung erfindungsgemäß immer noch für höhere Drücke geeignet ist.

Bevorzugt umfasst das Material des Funktionselements ein Metall, insbesondere Stahl, Edelstahl, Titan, Titanlegierungen, Aluminium sowie Aluminiumlegierungen, insbesondere aber eine NiFe-Legierung, bevorzugt CF25, eine FeCo-Legierung, besonders bevorzugt auch eine Beryllium-Kupfer-Legierung, Kovar, CF25, Wolfram oder Inconel, wie beispielsweise Inconel 690, Inconel 625, Inconel 740, Inconel 740X, Inconel 750, Inconel 750X.

In besonders bevorzugter Weise überschreitet die Druckbeaufschlagung des Materials des Grundkörpers innerhalb des Betriebsdruckbereichs der Durchführung die elastische Verformungsgrenze innerhalb des Materials des Grundkörpers sowie innerhalb des Materials des funktionalen Elements nicht.

Die ringförmige Nut und/oder der hervorragende Abschnitt kann auch einen nicht rechteckigen, insbesondere kegelstumpfförmigem Querschnitt aufweisen und/oder die sacklochartigen Öffnungen schräg verlaufend angeordnet sein. Durch diese Ausgestaltung kann die Einwirkung des senkrecht zur Längsachse der zumindest einen Durchgangsöffnung wirkenden Druckanteils vorteilhaft jeweils an verschiedene Tiefen angepasst eingestellt werden.

Besonders vorteilhaft ist auch eine Durchführung, insbesondere für Anwendungen bei hohem Außendruck, bei welcher $D_A$, den Außendurchmesser der Innenwand der ringförmigen Nut oder den Außendurchmesser der Außenwand des hervorragenden Abschnitts bezeichnet und Di den Durchmesser des Isolationsmaterials und somit insbesondere den Durchmesser der Durchgangsöffnung angibt, und das Verhältnis von $D_A$ /Di einen bevorzugten Wert in einem Bereich von $D_A$ /Di kleiner oder gleich 2 bis größer oder gleich 1,05 aufweist, einen besonders bevorzugter Wert für das Verhältnis $D_A$ /Di von kleiner oder gleich 1,6 bis größer oder gleich 1,10 aufweist und der bevorzugteste Wert des Verhältnisses $D_A$ /Di in einem Bereich von kleiner oder gleich 1,35 bis größer oder gleich 1,15 liegt.

Weiterhin vorteilhaft ist eine Durchführung, insbesondere für Anwendungen bei hohem Außendruck, bei welcher ein Überlappungsbereich der Druckkompensationseinrichtung mit der Einglasung und somit der Einglasungslänge des Isolationsmaterials in Längsrichtung der Durchgangsöffnung einen Wert von 0%, 50% oder 100 % der Einglasungslänge L aufweist und weitere bevorzugte Beträge dieses Überlappungsbereichs 10%, 15%, 20% und besonders bevorzugt auch 30% der Einglasungslänge betragen.

Bei einem Verfahren zur Herstellung einer Durchführung, insbesondere für Anwendungen bei hohem Aussendruck, wird an einem Grundkörper der Durchführung eine Druckkompensationseinrichtung ausgebildet, mittels welcher die Druckfestigkeit der Durchführung erhöht wird, wobei für die Ausbildung der Druckkompensationseinrichtung Material des Grundkörpers in der Nähe der Durchgangsöffnung auf der druckzugewandten Seite des Grundkörpers vermindert wird.

Vorteilhaft kann bei diesem Verfahren das Material des Grundkörpers zur Ausbildung einer Ringnut, einer sacklochartigen Bohrung oder zur Ausbildung eines hervorragenden Abschnitts vermindert, insbesondere materialabtragend vermindert werden. Vorteilhafte Verfahren sind Erodieren und/oder Fräsen. Ebenso denkbar sind allerdings auch Verfahren zur Herstellung des Grundkörpers, welche die erforderlichen Strukturen durch Einformen bereitstellen. Möglich sind beispielsweise die Herstellung des Grundköpers über Gussverfahren, insbes. Druckguss, oder aber auch Kaltumformverfahren.

Die erfindungsgemäße Durchführung weist in ihrer Anwendung neben der überraschend hohen Druckbeständigkeit weitere Vorteile auf. Vergleichstests mit Durchführungen ohne Druckkompensationseinrichtung und konischen oder stufenförmigen Profilen der Durchgangsöffnung, welche Rückhaltemittel für das Isolationsmaterial repräsentieren, haben gezeigt, dass die erfindungsgemäßen Durchführungen mit Druckkompensationseinrichtung zu weniger Spontanbrüchen des Isolationsmaterials neigen. Bei solchen Spontanbrüchen wird bei Erreichen einer Druckgrenze das Isolationsmaterial zerstört und es birst aus der Durchgangsöffnung. Dieser Berstdruck wird bei Test an einer Vielzahl von Bauteilen gemessen, das Ergebnis entspricht einer Gaußverteilung mit einer Verteilungsbreite um einen Mittelwert des Berstdrucks. Verglichen mit Durchführungen mit Rückhaltemitteln weisen die erfindungsgemäßen Durchführungen mit Druckkompensationseinrichtung eine deutlich geringere Verteilungsbreite um den Mittelwert aus. Dies bedeutet, dass bei der konstruktiven Auslegung einer erfindungsgemäßen Durchführung weniger Sicherheitsabstand zu der geforderten Druckdichtigkeit berücksichtigt werden muss. Ebenso sind im Betrieb einer erfindungsgemäßen Durchführung weniger spontane Fehler zu erwarten, welches deren Dauerbetriebsfestigkeit und Zuverlässigkeit auch im rauen Einsatz verbessert.

Es wird vermutet, dass das deutliche verbesserte Spontanbruch- und/oder Berstdruckverhalten der erfindungsgemäßen Durchführung mit Druckkompensationseinrichtung durch deren Wirkungsweise zu erklären ist. Bei sprödbrüchigen Isolationsmaterialien, insbes. Glasmaterialien und/oder zumindest teilkristallinen Materialien in der Durchgangsöffnung wird deren Bruch üblicherweise durch Initialrissbildung eingeleitet, der sich im Isolationsmaterial weiter ausbreitet. Der Initialriss kann durch Anisotropien und/oder Fehler im Volumen des Isolationsmaterial ausgelöst werden, insbesondere aber durch Fehler und/oder Beschädigungen der Oberfläche. Vor allem Oberflächenbeschädigungen können auch im Betriebszustand durch Wechselwirkung mit dem Fluid und/oder Fremdkörpern entstehen und unter Umständen unvermeidbar sein. Vor allem Initialrisse mit wesentlichen Anteilen parallel zur Achse der Durchgangsöffnung können maßgeblich für die beschriebenen Spontanbrüche sein. Die Druckkompensationseinrichtung der erfindungsgemäßen Durchführung bewirkt allerdings bei Druckbeaufschlagung, dass eine Druckkomponente senkrecht zur Achse der Durchgangsöffnung und damit senkrecht zur Ausbreitungsrichtung von kritischen Initialrissen im Isolationsmaterial entsteht. Entstehende Initialrisse werden dadurch wie vermutet wird sozusagen zugedrückt und deren Ausbreitung wird somit unterbunden oder zumindest behindert.

Besonders vorteilhaft ist die Verwendung einer hier in deren verschiedenen Ausführungsformen offenbarten und insbesondere auch als erfindungsgemäß offenbarten Durchführung für Einrichtungen in der Tiefsee und/oder Erdöl- und/oder Erdgasförder- oder Explorationsvorrichtung, und/oder in chemisch oder strahlungsbelasteten Umgebungen, wie beispielsweise in der chemischen Industrie oder in der Energieanlagen- und Reaktortechnik, insbesondere in explosionsgefährdeten Bereichen, in einer Energieerzeugungs- oder Energiespeichervorrichtung mit einem Gehäuse, oder in einer Kapselung einer Energieerzeugungsvorrichtung oder einer Energiespeichervorrichtung oder eines Reaktors oder einer Speichervorrichtung von toxischer und/oder schädlicher Materie, insbesondere als Durchführungseinrichtung innerhalb des Containments eines Reaktors oder Durchführungseinrichtung durch das Containment eines Reaktors, insbesondere eines chemischen oder Kernreaktors, oder in einem Raumfahrzeug oder Raumfahrt-Erkundungsfahrzeug, oder in bemannten und unbemannten Wasserfahrzeugen, beispielsweise Tauchrobotern und U-Booten. Insbesondere ist die Erfindung geeignet für die Verbindung von Sende- und/oder Empfangseinrichtungen und/oder in einem Gehäuse eines Sensors und/oder Aktuators, in all diesen Anwendungen, oder in Gastanks, insbesondere $CO_2$-Lager oder $H_2$-Tanks oder LNG-Tanks, oder vorzugsweise auch für Kraftfahrzeuge mit Brennstoffzellen oder Hochdruckeinspritzanlagen wie Common Rail

oder besonders bevorzugt in Maschinen wie Pressen oder hydraulischen Anlagen und/oder Vorrichtungen.

Die Erfindung wird nachfolgend anhand bevorzugter Ausführungsformen und unter Bezugnahme auf die beigeschlossenen Zeichnungen detaillierter beschrieben.

Es zeigen

| | |
|---|---|
| Figur 1 | eine Querschnittsdarstellung einer ersten bevorzugten Ausführungsform einer Durchführung, bei welcher sich die Schnittebene in etwa senkrecht verlaufend durch die Mitte der Durchführung erstreckt und die Druckkompensationseinrichtung eine ringförmige Nut umfasst, |
| Figur 2 | eine Querschnittsdarstellung des Details Ader in Figur 1 dargestellten ersten bevorzugten Ausführungsform, |
| Figur 2a | eine weitere Querschnittsdarstellung des Details Ader in Figur 1 dargestellten ersten bevorzugten Ausführungsform, insbesondere auch zur Veranschaulichung der Einglasungslänge L sowie des Überlappungsbereichs B mit der jeweiligen Druckkompensationseinrichtung, welche bei dieser Ausführungsform eine Nut umfasst, |
| Figur 3 | eine Querschnittsdarstellung einer Durchführung ohne Druckkompensationseinrichtung, bei welcher sich die Schnittebene in etwa senkrecht verlaufend durch die Mitte der Durchführung erstreckt, |
| Figur 4 | eine Querschnittsdarstellung des Details A einer zweiten bevorzugten Ausführungsform, bei welcher die Druckkompensationseinrichtung eine ringförmige Nut umfasst, |
| Figur 5 | eine Querschnittsdarstellung des Details A einer dritten bevorzugten Ausführungsform, bei welcher die Druckkompensationseinrichtung eine ringförmige Nut umfasst, |
| Figur 6 | eine Querschnittsdarstellung des Details A einer dritten bevorzugten Ausführungsform, bei welcher die Druckkompensationseinrichtung eine ringförmige Nut umfasst, |
| Figur 7a | eine Aufsicht auf eine jeweils in den Figuren 1 und 4 bis 6 gezeigten Durchführungen der jeweiligen bevorzugten Ausführungsformen in Richtung des Pfeils X der Figur 1, bei welcher die Druckkompensationseinrichtung jeweils eine ringförmige Nut umfasst, |
| Figur 7b | eine Aufsicht auf ein funktionales Element der jeweils in den Figuren 1 und 4 bis 6 gezeigten Durchführungen der jeweiligen bevorzugten Ausführungsformen in Richtung des Pfeils X der Figur 1, bei welcher auch die das funktionale Element umgebende ringförmige Nut erkennbar ist, |
| Figur 7c | eine Aufsicht auf ein funktionales Element der jeweils in den Figuren 9 bis 13 gezeigten Durchführungen der jeweiligen bevorzugten Ausführungsformen in Richtung des Pfeils X der Figur 1, bei welcher auch der das funktionale Element umgebende hervorragende Abschnitt erkennbar ist und bei welcher um der Klarheit willen weitere Teile des Grundkörpers der Durchführung nicht dargestellt sind, |
| Figur 8a | eine Aufsicht auf eine Durchführung einer weiteren bevorzugten Ausführungsform in einer Richtung, welche der Richtung des Pfeils X der Figur 1 entspricht, bei welcher die Druckkompensationseinrichtung sacklochartige Öffnungen im Material des Grundkörpers umfasst, |
| Figur 8b | eine Aufsicht auf das funktionale Element der in Figur 8a gezeigten Durchführung in einer Richtung, welche der Richtung des Pfeils X der Figur 1 entspricht, bei welcher auch die das funktionale Element umgebenden sacklochartige Öffnungen im Material des Grundkörpers erkennbar sind, |
| Figur 9 | eine Querschnittsdarstellung einer ersten bevorzugten Ausführungsform einer Durchführung, bei welcher sich die Schnittebene in etwa senkrecht verlaufend durch die Mitte der Durchführung erstreckt und die Druckkompensationseinrichtung einen hervorragenden Abschnitt des Grundkörpers umfasst, welcher als ringförmige Erhebung ausgebildet ist, |
| Figur 10 | eine Querschnittsdarstellung des Details B der ersten bevorzugten Ausführungsform einer Durchführung aus Figur 9, |
| Figur 10a | eine weitere Querschnittsdarstellung des Details B der ersten bevorzugten Ausführungsform einer Durchführung aus Figur 9, insbesondere auch zur Veranschaulichung der Einglasungslänge L sowie des Überlappungsbereichs B mit der jeweiligen Druckkompensationseinrichtung, welche bei dieser Ausführungsform einen hervorragenden Abschnitt umfasst, |

Figur 11      eine Querschnittsdarstellung des Details B einer zweiten bevorzugten Ausführungsform,

Figur 12      eine Querschnittsdarstellung des Details B einer dritten bevorzugten Ausführungsform,

Figur 13      eine Querschnittsdarstellung des Details B einer dritten bevorzugten Ausführungsform,

Figur 14 bis Figur 21      verschiedene Querschnittsformen des hervorragenden Abschnitts.

Detaillierte Beschreibung bevorzugter Ausführungsformen

Bei der nachfolgenden detaillierten Beschreibung der bevorzugten Ausführungsformen bezeichnen gleiche Bezugszeichen jeweils gleiche funktionale Elemente und sind die Darstellungen um der Klarheit willen nicht immer maßstabsgerecht ausgeführt.

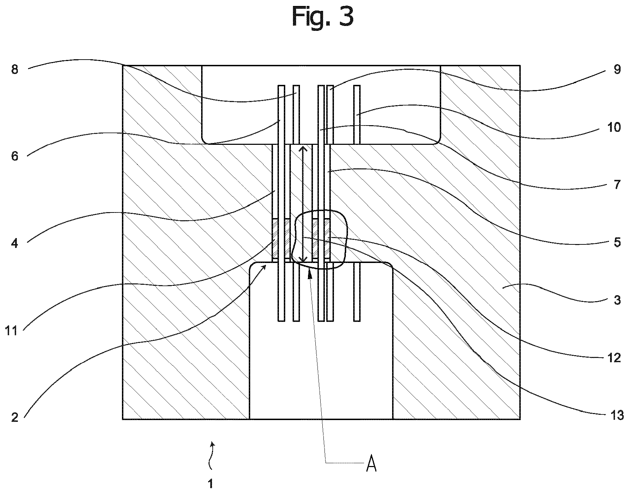

Zunächst soll unter Bezugnahme auf Figur 3 eine Durchführung ohne Druckkompensationseinrichtung beschrieben werden, um anhand dieser Beschreibung die erfindungsgemäßen Wirkungen und Vorteile nachfolgend besser verstehen zu können.

Mit dem Bezugszeichen 1 ist in Figur 3 insgesamt die zu beschreibende Durchführung 1 bezeichnet, an welcher von der druckzugewandten, insbesondere außendruckzugewandten Seite 2 des Grundkörpers 3 her die von der Durchführung 1 zu beherrschenden Drücke anliegen.

Durch den Grundkörper 3 hindurch erstrecken sich Durchgangsöffnungen 4 und 5, in welchen jeweils die funktionalen Elemente 6 und 7 angeordnet und, wie nachfolgend noch detaillierter beschrieben werden wird, durch eine Druckeinglasung gehalten sind.

Weitere funktionale Elemente 8, 9 und 10 sind zwar in Aufsicht erkennbar, jedoch sind aufgrund der Lage der Schnittebene die jeweils zugehörigen Durchgangsöffnungen nicht sichtbar. Wegen der vorliegenden funktionalen Gleichheit gelten die nachfolgenden Aussagen bezüglich der funktionalen Elemente 6 und 7 in analoger Weise auch für die funktionalen Elemente 8, 9 und 10. Mittels des Isolationsmaterials 11 und 12, welches jeweils das funktionale Element 6 und 7 zumindest bereichsweise umgibt, wird jeweils eine fluiddichte Verbindung zwischen dem funktionalen Element 6 und 7 und dem Grundkörper 3 hergestellt.

Wenn das Isolationsmaterial Glas oder glaskeramisches Material umfasst, kann diese fluiddichte Verbindung auch als Druckeinglasung des funktionalen Elements 6 und 7 im Grundkörper 3 ausgeführt sein.

Als fluiddicht können Durchführungen im Rahmen dieser Offenbarung beispielsweise dann angesehen werden, wenn diese eine Leckrate von weniger als $1 \times 10^{-3}$ mbar * l/sec bei He und 1 bar Druckdifferenz in deren gesamtem Betriebsdruckbereich aufweisen.

Bisher waren Durchführungen in der Regel so gestaltet, dass das Isolationsmaterial, welches das funktionale Element hält, mit welchem beispielsweise eine elektrische Verbindung herstellt wird, etwas in der Durchgangsöffnung hinter der Oberfläche des Grundkörpers zurücksteht.

Es hat sich gezeigt, dass in diesen Bereich dringendes Fluid unter hohem Druck die Durchgangsöffnung "aufbiegen" kann, wodurch das Isolationsmaterial aus dem Grundkörper herausgedrückt werden und die Durchführung in Folge versagen, diese bedeutet deren Fluiddichtigkeit oder Hermetizität verlieren kann. Dieser Effekt ist durchaus in der Lage, die maximale Druckbelastungsgrenze der Durchführung zu bestimmen.

Als maximale Druckbelastungsgrenze wird Rahmen dieser Offenbarung auch der Begriff der Druckfestigkeit verwenden, welcher den höchsten Druck angibt, welchem die jeweilige Durchführung noch standhält.

Bei einer derartigen Durchführung wurde ein Ausfall bei etwa 2700 bar, mit einem anderen als dem angegebenen Glas sogar manchmal bereits bei 2000 bar verzeichnet, dies bedeutet, dass bei 2700 bar keine hermetische oder fluiddichte Verbindung mehr gegeben war, da sich das unter Druck stehende Fluid zwischen dem Grundkörper 3 und dem Isolationsmaterial 12 hindurch drücken konnte, wobei jedoch die Verbindung des funktionalen Elements 6, 7 mit dem Isolationsmaterial 11, 12 im Wesentlichen nicht geschädigt wurde.

Der Grundkörper 3 dieser Durchführung 1 bestand aus Inconel 625 und das für die Druckeinglasung verwendete Glas war das Borosilikatglas G018-385, welches einen Erweichungs- oder Glasübergangspunkt Tg von 992°C aufweist. Die mit einem Doppelpfeil 13 in Figur 3 dargestellte Dicke des Grundkörpers 3 betrug 3 cm. Der Durchmesser der Durchgangsöffnung 4, 5 und somit auch der Außendurchmesser des als Isolationsmaterial 11, 12 verwendeten Glases betrug 4,5 mm.

Wurde nun von diesem Grundkörper 3 Material in geeigneter Weise und wie nachfolgend noch detaillierter beschrieben abgetragen, konnte damit die Druckfestigkeit dieser Durchführung erheblich gesteigert werden.

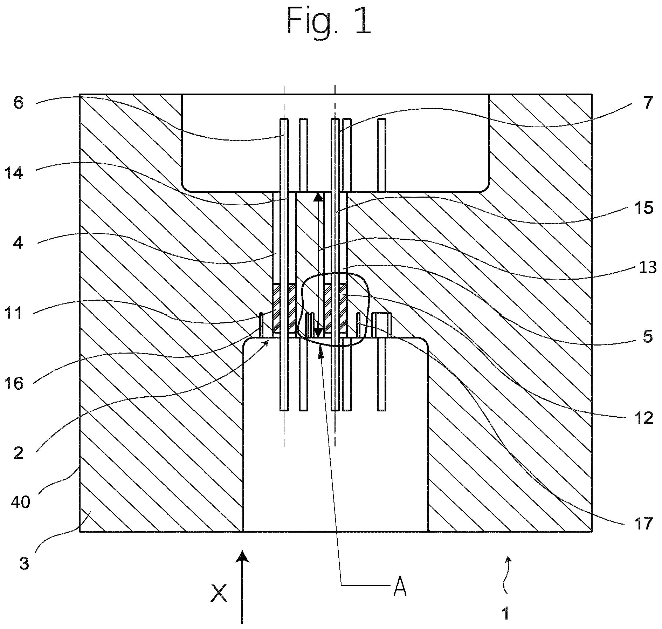

Nachfolgend wird auf Figur 1 Bezug genommen und beispielhaft lediglich anhand der Durchgangsöffnungen 4, 5 des Grundkörpers 3 sowie des jeweils darin gehaltenen Isolationsmaterials 11, 12 und des jeweiligen funktionalen Elements 6, 7 ein wesentlicher Aspekt der vorliegenden Erfindung erläutert, welcher jedoch in ähnlicher Weise auch bei den weiteren bevorzugten und nachfolgend noch detaillierter beschriebenen Ausführungsformen verwirklicht werden konnte.

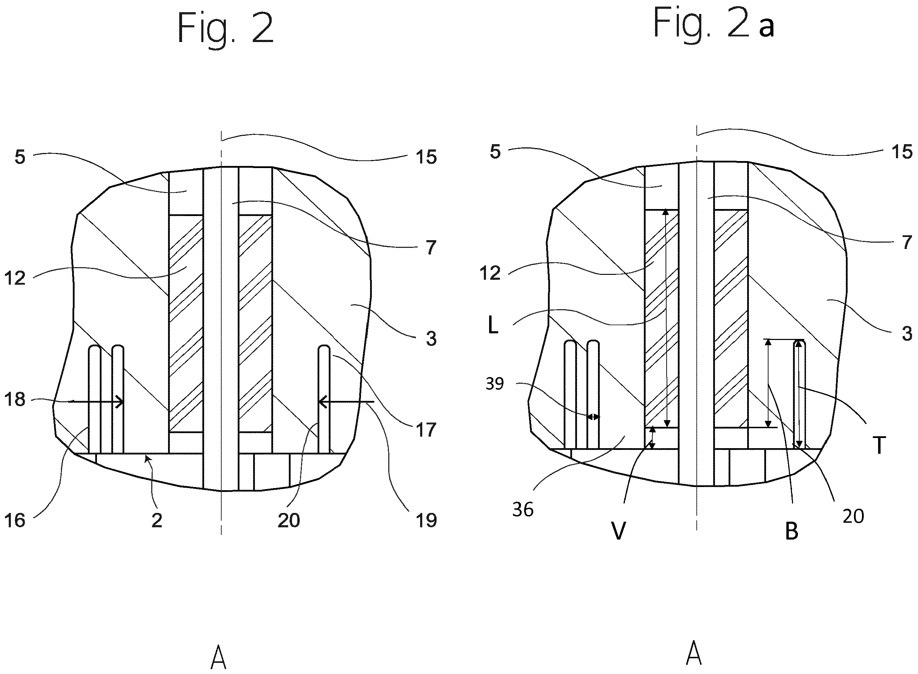

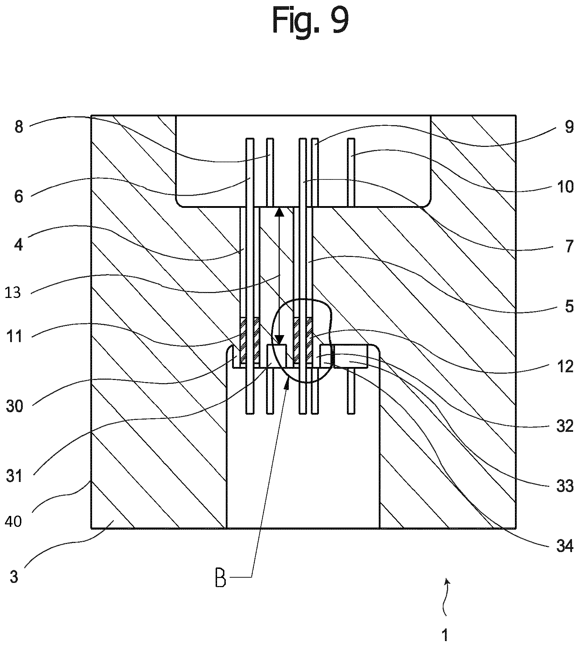

Diese in Figur 1 dargestellte erste bevorzugte Ausführungsform der Durchführung 1 entsprach bis auf die nachfolgend erläuterte Druckkompensationseinrichtung vollständig der unter Bezugnahme auf Figur 2 beschriebenen Durchführung 1. Somit bezeichnet der Doppelpfeil 13 auch in den weiteren Ausführungsformen die Dicke D des Grundkörpers 3 in axialer Richtung an einem Ort, an welchem sich in axialer Richtung keine Anteile der Druckkompensationseinrichtung, somit keine ringförmige Nut, keine sacklochartige Öffnung und kein hervorkragender Abschnitt, befinden, wie dieses beispielhaft auch den Doppelpfeilen 13 der Figuren 1 und 9 zu entnehmen ist. Konstruktiv wird diese Dicke D, 13 des Grundkörpers 3 so gewählt, dass auch eine Verminderung im Bereich der ringförmigen Nuten 16, 17 oder der sacklochartigen Öffnungen 23 bis 29 um deren Tiefe T nicht zu einer Reduzierung der Druckfestigkeit der Durchführung 1 führt.

Gleiches gilt für den unter und neben den hervorkragenden Abschnitten 30 bis 34 liegenden jeweiligen Bereich des Grundkörpers 3.

Die Längsrichtung der Durchgangsöffnung 4, 5, welche im Rahmen dieser Offenbarung auch als Achse oder Mittellinie bezeichnet wird, ist in Figur 1 jeweils mit strichpunktierten Linien 14, 15 dargestellt und entspricht im Falle einer Durchgangsöffnung mit kreisförmigem Querschnitt, somit einer zylindrischen Durchgangsöffnung, deren Symmetrielinie, welche auch als deren Zylinderachse bezeichnet wird. Es soll, wenn im Rahmen dieser Offenbarung auf die Längsrichtung Bezug genommen wird, dieses die Richtung der Linien 14, 15 sein. Wenn jedoch auf die Längsachse Bezug genommen wird, soll dieses auch die tatsächliche örtliche Lage der strichpunktierten Linien 14, 15, somit die tatsächliche örtliche Lage der Symmetrieachse, insbesondere der Zylinderachse mit umfassen und damit auch einen Bezug auf diese räumliche Lage, insbesondere auch für Bemaßungsangaben, ermöglichen.

Als Druckkompensationseinrichtung wurden ringförmige Nuten 16, 17, beispielsweise mittels Funkenerosion, in den Grundkörper 3 eingebracht, welche jeweils symmetrisch zur Durchgangsöffnung 4, 5 auf der dem Druck, insbesondere dem Außendruck zugewandten Seite 2 des Grundkörpers 3 insbesondere so angeordnet wurden, dass deren jeweiligen Zylinderachsen übereinander lagen.

Es wurden in den ringförmigen Nuten 16, 17 durch den Außendruck entstandene Druckanteile senkrecht zu der Längsrichtung 15 der Durchgangsöffnung 5, somit in radialer oder radial zur Längsachse verlaufender Richtung zu Randbereichen des die zumindest eine Durchgangsöffnung umgebenden Materials des Grundkörpers 3 geleitet. Der beispielhaft in der Nut 17 entstehende Druck wirkt zunächst nach allen Seiten hin und damit insbesondere auch in Richtung der Pfeile 18 und 19, welche sich senkrecht zur Längsrichtung 15 der Durchgangsöffnung 5 erstrecken. Diese Kraftanteile wirken jedoch den aufbiegenden Kräften des herrschenden Drucks druckkompensierend entgegen und sind bei den weiteren Ausführungsformen in ähnlicher Weise dargestellt, um auch bei diesen die druckkompensierende Wirkung zu veranschaulichen.

Bevorzugt wird für das Material des Grundkörpers 3 ein Metall verwendet, welches insbesondere Stahl, Edelstahl, FeCo-Legierungen, Titan, Titanlegierungen, Aluminium sowie Aluminiumlegierungen, Kovar oder Inconel, beispielsweise Inconel 690 und/oder Inconel 625 und/oder Inconel 740 und/oder Inconel 740X und/oder Inconel 750 und/oder Inconel 750X umfasst oder daraus besteht und vorzugsweise damit eine definierte Elastizität bereitstellt.

Dabei erstrecken sich diese Randbereiche, auf welche die Kraftkomponenten des Drucks druckkompensierend einwirken vorzugsweise schräg oder parallel zur Längsachse der zumindest einen Durchgangsöffnung, wie beispielsweise die Innenwand 20 der ringförmigen Nut 17.

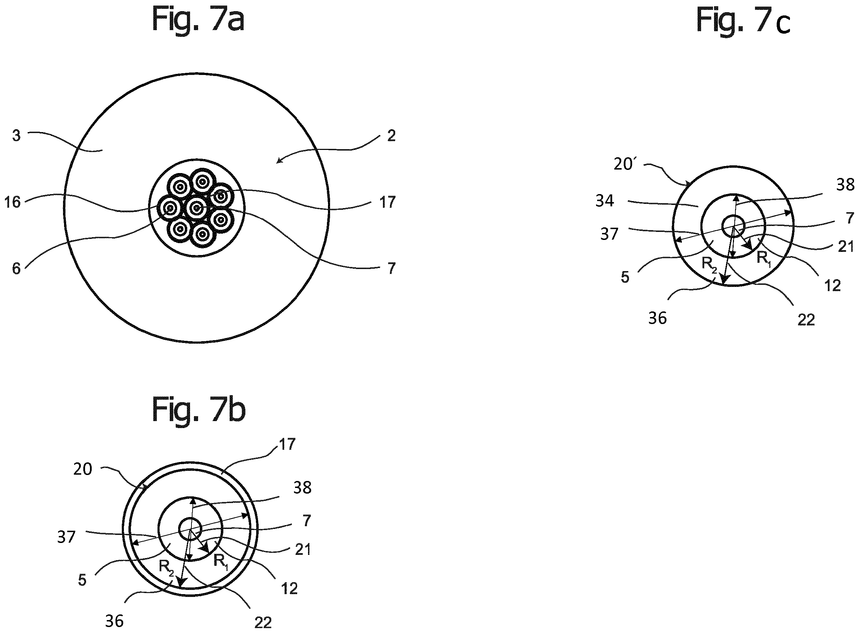

Nachfolgend wird zunächst auf Figur 7b Bezug genommen, welche eine Aufsicht auf ein funktionales Element 7 der jeweils in den Figuren 1 und 3 bis 6 gezeigten Durchführungen der jeweiligen bevorzugten Ausführungsformen in Richtung des Pfeils X der Figur 1 zeigt, bei welcher auch die das funktionale Element umgebende ringförmige Nut 17 mit deren Innenwand 20 erkennbar ist.

Das Isolationsmaterial 12 erstreckt sich bei allen Ausführungsformen der Durchführung 1 innerhalb der Durchgangsöffnung 4, 5 jeweils radial bis zu deren Rand, welches mit dem Pfeil 21 dargestellt ist, welcher diese radiale Erstreckung $R_1$ von der Längsachse 15 ausgehend darstellt.

Für den Durchmesser dieses Rands der Durchgangsöffnung 4, 5 und somit für den Innendurchmesser Di eines hervorkragenden Abschnitts 30 bis 34 oder auch für den Innendurchmesser des radial einwärts hinter der Nut 16, 17 liegenden Materials (somit des Randwalls 36) des Grundkörpers 3 ergibt sich hierbei der Wert $Di = 2 * R_1$. Bei den bevorzugten Ausführungsformen der Durchführung 1 entspricht dieser Durchmesser Di auch dem äußeren Durchmesser des Isolationsmaterials 11, 12 innerhalb der Durchgangsöffnung 4, 5.

In den Figuren 7b und 7c ist der Durchmesser Di jeweils mit dem Bezugszeichen 38 versehen, wobei Figur 7c eine Aufsicht auf ein funktionales Element der jeweils in den Figuren 9 bis 13 gezeigten Durchführungen der jeweiligen bevorzugten Ausführungsformen in Richtung des Pfeils X der Figur 1, bei welcher auch das Isolationsmaterial 12 umgebende hervorkragende Abschnitt 34 sowie ein von diesem gebildeter Randwall 36 erkennbar ist.

Der Pfeil 22 stellt jeweils die radiale Erstreckung $R_2$ von der Längsachse 15 ausgehend bis zur Innenwand 20 der ringförmigen Nut 17 oder ausgehend von der Längsachse 15 bis zur Außenwand 20' des hervorkragenden Abschnitts 30 bis 34 dar. Für den Durchmesser oder Außendurchmesser $D_A$ der Innenwand 20 der ringförmigen Nut 17 oder der Außenwand 20' des hervorkragenden Abschnitts 30 bis 34 ergibt sich der Wert $D_A = 2 * R_2$.

In den Figuren 7b und 7c ist der Durchmesser $D_A$ jeweils mit dem Bezugszeichen 37 versehen,

Vorteilhaft wird für das Isolationsmaterial 12, insbesondere auch bei der jeweils in Figur 7b und 7c dargestellten Ausführungsform ein Glas und/oder ein glaskeramisches Material und/oder ein keramisches Material verwendet.

Bevorzugt wird mit dem Isolationsmaterial 12 eine Druckeinglasung hergestellt, bei welcher zu deren Herstellung das Glas oder das glaskeramische Material so weit über dessen Erweichungs- oder Glasübergangspunkt Tg hinausgehend erwärmt wird, dass dieses innerhalb der Durchgangsöffnung 5 sowohl am Grundkörper 3 als auch am jeweiligen funktionalen Element 6 bis 10 anschmelzen kann. Bei der darauf folgenden Abkühlung verfestigt sich das Glas oder glaskeramische Material und es entstehen aufgrund verschiedener thermischer Ausdehnungskoeffizienten des Materials des Grundköpers 3 und des Glases oder glaskeramischen Materials vom Grundkörper 3 ausgehende auf das Glas oder glaskeramische Material einwirkende Druckspannungen. Hierbei ist es nötig, dass diese die Druckspannungen erzeugenden Kräfte, insbesondere auch zum druckfesten Halten des Glases oder glaskeramischen Materials auch von dem jeweiligen Grundkörper 3 aufgebracht werden kann und muss dieser eine bestimmte Dicke $D_G$ im Bereich um das Glas oder glaskeramische Material aufweisen.

Diese Dicke entspricht jedoch, wie aus Figur 7b zu erkennen ist, der Differenz der Radien $R_1$ und $R_2$

$$D_G = R_2 - R_1,$$

wobei das diese Dicke ausbildende Material des Grundkörpers 3 wie bereits vorstehend erwähnt auch als Randwall bezeichnet wird und mit dem Bezugszeichen 36 versehen ist. Dieses ist das Material des hervorkragenden Abschnitts 30 bis 34 oder das radial einwärts hinter der Nut 20 liegende Material des Grundkörpers 3.

Um diese Kräfte bei einem Grundkörper 3 aus Stahl aufbringen zu können, haben die Erfinder bemerkt, soll diese Dicke $D_G$ den Wert von $1,15 * R_{1,\text{ bevorzugt von}}$ $1,3 * R_1$ nicht unterschreiten und um diese Kräfte bei einem Grundkörper 3 aus Edelstahl aufbringen zu können, soll diese Dicke $D_G$ den Wert von $1,25 * R_1$, bevorzug von $1,6 * R_1$ nicht unterschreiten.

Hierbei wird davon ausgegangen, dass die Erstreckung des Isolationsmaterials 12 in seiner Längsrichtung in etwa $5 * R_1$ betrug.

Auch bei allen weiteren beschriebenen Ausführungsformen, sowohl denjenigen mit als auch denjenigen ohne Druckkompensationseinrichtung, lag dieser Wert soweit nichts anderes angegeben wurde, in etwa in diesem Bereich von $5 * R_1$. Vorteilhaft sind jedoch auch Werte für die Erstreckung des Isolationsmaterials 12 in Längsrichtung 14, 15 der jeweiligen Durchgangsöffnung 4, 5 von $1 * R_1$ bis $10 * R_1$ möglich.

Für bevorzugte Ausführungsformen ist das Volumen des Materials zwischen der Nut 16, 17 und dem Isolationsmaterial 12 sehr viel kleiner als das Volumen des Materials des Grundkörpers 3 zwischen der Nut und dem Aussenrand 40 der Durchführung 1. Für diesen Vergleich der jeweiligen Volumina wird als "das Volumen des Materials zwischen der Nut 16, 17 und dem Isolationsmaterial 12" das Volumen des Randwalls 36 bis zur Tiefe T berücksichtigt. Als "das Volumen des Materials des Grundkörpers 3 zwischen der Nut 16, 17 und dem Aussenrand 40 der Durchführung 1" wird das Volumen desjenigen Materials zugrunde gelegt, welches sich im Grundkörper 3 zwischen der Nut 16, 17 mit der Breite Di radial auswärts bis zum Aussenrand 40, siehe beispielsweise Figur 1, und mit einer Tiefe von ebenfalls T erstreckt.

Derartige Ausführungsformen sind besonders vorteilhaft, wenn die Durchführung zur späteren Montage in weitere Baugruppen eingeschweisst werden soll, da hierbei während des Schweissvorgangs nur eine verminderte Erwärmung des Isolationsmaterials 12 auftritt.

Für weitere bevorzugte Ausführungsformen ist das Volumen des Materials des hervorkragenden Abschnitts 30 bis 34 sehr viel kleiner als das Volumen des Materials des Grundkörpers 3 zwischen dem hervorkragenden Abschnitt 30 bis 34 und dem Aussenrand 40 des Grundkörpers 3 der Durchführung 1. Für diesen Vergleich der jeweiligen Volumina wird als "das Volumen des hervorkragenden Abschnitts 30 bis 34" auch bei diesen Ausführungsformen das Volumen des Randwalls 36 bis zur Tiefe T berücksichtigt. Als "das Volumen des Materials des Grundkörpers 3 zwischen dem hervorkragenden Abschnitt 30 bis 34 und dem Aussenrand 40 der Durchführung 1" wird das Volumen desjenigen Materials zugrunde gelegt, welches sich im Grundkörper 3 ab der Außenwand 20' des hervorkragenden Abschnitts 30 bis 34 mit der Breite Di radial auswärts bis zum Aussenrand 40, siehe beispielsweise Figur 9, und mit einer Tiefe von ebenfalls T erstreckt.

Auch diese Ausführungsformen sind besonders vorteilhaft, wenn die Durchführung zur späteren Montage in weitere Baugruppen eingeschweisst werden soll, da hierbei während des Schweissvorgangs nur eine verminderte Erwärmung des Isolationsmaterials 12 auftritt

Falls die thermischen Ausdehnungskoeffizienten des Materials des Grundkörpers 3 und des Glases oder glaskeramischen Materials aneinander angepasst sind, wie beispielsweise bei Verwendung von Kovar, vorzugsweise mit Legierungsanteilen von Fe: 54 %, Ni: 28 %, Co: 18 %, für das Material des Grundkörpers und eines Borosilikatglases für das Isolationsmaterial 12, soll diese Dicke $D_G$ dann den Wert von $1,1 * R_1$ nicht unterschreiten.

Dies bedeutet, dass der Radius der Innenwand 20 der ringförmigen Nut 17 bei einer Druckeinglasung nicht beliebig klein gemacht werden kann, obwohl dieses für eine möglichst gute druckkompensierende Wirkung zunächst als am naheliegendsten erscheinen könnte.

Überraschend haben die Erfinder herausgefunden, dass bei Edelstahl ein Radius $R_2$ der Innenwand 20 von $1,7 * R_1$ zu einer sehr starken Erhöhung der Druckfestigkeit führte, welche bei derjenigen Durchführung 1, die bei 2700 bar geborsten war noch Drücken von 4000 bar standhielt, nachdem einer ansonsten gleichen Durchführung eine Druckkompensationseinrichtung in Form der ringförmigen Nut 17 hinzugefügt worden war.

Die Erfinder haben auch herausgefunden, dass das Verhältnis von $D_A$/Di und somit das Verhältnis der Radien $R_2/R_1$ vorteilhaft in einem Bereich von 1,05 bis 2 liegen kann.

Ein besonders bevorzugter Wert für das Verhältnis $D_A$/Di liegt in dem Bereich kleiner oder gleich 1,6 bis größer oder gleich 1,10 und der bevorzugteste Wert des Verhältnisses $D_A$/Di liegt in dem Bereich kleiner oder gleich 1,35 bis größer oder gleich 1,15. Gleiches gilt auch für das Verhältnis der Radien $R_2/R_1$.

Bei Verwendung der vorstehend angegebenen Werte für das Verhältnis $R_2/R_1$ sowie das Verhältnis $D_A$/Di zeigte sich im Bereich der Innenwand der ringförmigen Nut 20 sowie bei den weiteren Ausführungsformen im Bereich der Außenwand 20' des hervorkragenden Abschnitts, dass insbesondere im Hochdruckbereich, somit in einem Druckbereich von mehr als 1000 bar, eine Kompression auf das funktionale Element ausgeübt wurde, welches die Druckfestigkeit der Durchführung 1 erhöhte.

Zusätzlich oder alternativ zur Bestimmung der Leckrate, insbesondere der Helium-Leckrate, kann ein hydrostatischer Test durchgeführt werden, beispielsweise mit Wasser, welches mit einem Leuchtstoff versetzt ist, indem mit diesem Wasser der auf die Durchführung 1 wirkende Aussendruck erzeugt wird. Sobald man bei zunehmender Erhöhung des durch das Wasser erzeugten Aussendrucks auf der aussendruckabgewandten Seite der Durchführung 1 und insbesondere hinter dem Isolationsmaterial 11, 12, mit UV Licht den hindurchgetretenen Leuchtstoff erkennen kann, ist dieses ein Maß für eine nicht mehr ausreichende Druckfestigkeit der Durchführung 1 gegenüber dem dann herrschenden Aussendruck.

Mit außen ist im Rahmen dieser Offenbarung diejenige Seite der Durchführung 1 gemeint, welcher die jeweilige Druckkompensationseinrichtung zugewandt ist, somit die Seite, zu welcher sich die ringförmigen Nuten 16, 17 oder sich die sacklochartigen Öffnungen 23 bis 29 hin öffnen oder sich ein hervorkragender Abschnitt 30 bis 34 hin erstreckt. Als Aussendruck wird folglich ein im Betriebszustand auf diese Seite der Durchführung 1 einwirkender Druck, somit ein von außen wirkender Druck verstanden.

Dieser bis zum Versagen der Durchführung 1 durchgeführte hydrostatische Test hat den Vorteil, dass man erkennen kann, wie weit man von der geforderten Spezifikation mit einem Sicherheitsabstand bezüglich der Druckfestigkeit entfernt ist und erlaubt es auch, sicher die Streuung der Druckfestigkeit zu ermitteln, um diesen vorbestimmten Abstand zuverlässig auch in der Produktion einhalten zu können.

Soweit vorstehend auf eine Innenwand einer ringförmigen Nut Bezug genommen wurde, gilt dieses in gleicher Weise auch für Ausführungsformen, bei welchen keine ringförmige Nut vorhanden ist, dann gelten die getroffenen Aussagen nicht für den Außendurchmesser $D_A$ der Innenwand 20, sondern für den Außendurchmesser $D_A$ der Außenwand 20'des hervorkragenden Abschnitts 30 bis 34.

Die vorstehenden Ausführungen gelten für sämtliche offenbarte Ausführungsformen, bei welchen die Innenwand 20 in im Wesentlichen zylindrischer Form ausgebildet ist und in gleicher Weise auch für Ausführungsformen, bei welchen statt einer zylindrischen eine kegelstumpfartige Form vorliegt. Soweit die Innenwand 20 bei weiteren Ausführungsformen relativ zur Längsachse 15 geneigt ist, sollten sich dann alle auftretenden Radien zumindest in dem vorstehend angegebenen bevorzugten Bereich befinden.

Generell sollte $R_2$ den zehnfachen Wert von $R_1$ nicht überschreiten, da oberhalb dieser Werte die druckkompensierende Wirkung als gering erscheint. Bevorzugt ist $R_2$ kleiner oder gleich dem dreifachen Wert von $R_1$ und am bevorzugtesten ist $R_2$ kleiner oder gleich dem zweifachen Wert von $R_1$.

Durch schrittweise Verkleinerung, vorzugsweise materialabtragende Verkleinerung des Radius $R_2$ der Innen-wand 20 konnte eine möglichst gute druckkompensierende Wirkung erzielt werden, welche bereits ab einer Tiefe der Nut von 1/10 mm feststellbar war, wobei als Tiefe eine Richtung parallel zur Längsrichtung 15 der Durchgangsöffnung 5 in das Material des Grundkörpers 3 hinein verlaufend verstanden wird.

Hierdurch konnte auch sichergestellt werden, dass die Druckbeaufschlagung des Materials des Grundkörpers 3 innerhalb des Betriebsdruckbereichs der Durchführung 1 die elastische Verformungsgrenze innerhalb des Materials des Grundkörpers 3 nicht überschreitet. Als Betriebsdruckbereich wird hierbei ein Druckbereich verstanden, welcher betriebssicher unterhalb des maximal möglichen Drucks, welcher die Druckfestigkeit beschreibt, verbleibt und somit auch reale Fertigungstoleranzen mit berücksichtigt.

Innerhalb der vorstehend erwähnten Grenzen konnten keine irreversiblen, insbesondere nichtelastischen Verformungen festgestellt werden.

Je nach Ausgestaltung der Druckkompensationseinrichtung, insbesondere des Radius $R_2$ der Innenwand 20, hält die Verbindung zwischen dem Grundkörper 3 und dem Funktionselement 6 bis 10, insbesondere die Verbindung des Isolationsmaterials 12 mit dem Grundkörper 3, gegenüber einer Durchführung ohne Druckkompensationseinrichtung, insbesondere Außendruckkompensationseinrichtung, 20 %, bevorzugter um 50 % und am bevorzugtesten um 100% erhöhten Betriebsdrucken fluiddicht und regelmäßig auch dauerbetriebsfest stand.

Es hat sich zusammengefasst in höchst überraschender Weise gezeigt, dass eine Schwächung oder Verminderung der Stärke des Materials des Grundkörpers 3, welches das die hermetisch dichtende Verbindung zum funktionalen Element herstellende Isolationsmaterial 12 umgibt, zu einer Erhöhung der Druckfestigkeit der Durchführung 1 führen kann.

In höchst überraschender Weise hat es sich auch gezeigt, dass diese Erhöhung der Druckfestigkeit bis zu deren Verdoppelung reichen oder sogar darüber hinaus gehen kann.

Hierbei muss jedoch eine, wie im Stand der Technik vorgeschlagene irreversible Deformation nicht eintreten, insbesondere nicht, wenn für den Grundkörper Materialien eingesetzt werden, die eine Elastizität, wie beispielsweise die der bereits vorstehend erwähnten Metalle, beispielsweise Stahl, Edelstahl, FeCo-Legierungen, Titan, Titanlegierungen, Aluminium sowie Aluminiumlegierungen, Kovar oder Inconel, beispielsweise Inconel 690 und/oder Inconel 625 aufweisen.

Als Werkstoff für das Funktionselement, welches wie vorstehend erwähnt im Rahmen dieser Offenbarung auch als funktionales Element bezeichnet wird, eignen sich generell neben Stahl und/oder Edelstahl auch Titan und/oder Titanlegierungen, NiFe-Legierungen, bevorzugt CF25, FeCo-Legierungen, besonders auch Beryllium-Kupfer-Legierungen, Kovar, CF25, Wolfram oder Inconel, wie beispielsweise Inconel 690, Inconel 625, Inconel 740, Inconel 740X, Inconel 750, Inconel 750X und weitere.

Liegt das Verhältnis $D_A$ /Di näher bei den vorstehend als bevorzugt, besonders bevorzug oder als am bevorzugtesten angegebenen höheren Werten, so haben sich für das funktionale Element 6 bis 10 Legierungen mit niedriger Dehnung, welche beispielsweise NiFe-Legierungen, Kovar, CF25 und Wolfram umfassen, als vorteilhaft erwiesen.

Liegt das Verhältnis $D_A$ /Di näher bei den vorstehend als bevorzugt, besonders bevorzug oder als am bevorzugtesten angegebenen niedrigeren Werten, so haben sich für das funktionale Element 6 bis 10 Legierungen mit hoher Dehnung, welche beispielsweise Inconel 740, Inconel 740X Inconel 750 und/oder Inconel 750X umfassen, als vorteilhaft erwiesen, denn dann entsteht ein geringerer Druck auf das funktionale Element 6 bis 10, insbesondere in dessen der Außenseite der Durchführung 1 zugewandtem Bereich.

Als Werkstoff für das Isolationsmaterial 12 eignet sich wie vorstehend erwähnt generell Glas, glaskeramisches Material und/oder keramisches Material. Besonders vorteilhaft als Glas ist ein amorphes Material, insbesondere ein Multikomponentenglas. Ebenso möglich und von der Erfindung umfasst sind allerdings auch Quarzmaterialien, z.B. sogenannte Quarzgläser.

Bevorzugte Gläser umfassen Hartgläser und folglich die auch als Hartgläser bezeichneten Borosilikatgläser. Ein bevorzugtes Glas ist beispielsweise das Glas G018-385 der Schott AG mit Tg bei 992 °C.

Weitere bevorzugte Materialien umfassen Gläser, welche teilweise oder auch vollständig kristallisierbar sind, wie beispielsweise das zumindest teilweise kristallisierte oder kristallisierbare Glas mit folgenden Oxiden in Gew.-%:

| | |
|---|---|
| $SiO_2$: | 20 bis 60, bevorzugt 25 bis 50 |
| $Al_2O_3$: | 0,5 bis 20, bevorzugt 0,5 bis 10 |

| | |
|---|---|
| CaO: | 10 bis 50 |
| MgO: | 0,5 bis 50, bevorzugt 0,5 bis 10 |
| $Y_2O_3$: | 0,1 bis 20, bevorzugt 3 bis 20 |
| $ZrO_2$: | 0,1 bis 25, bevorzugt 3 bis 20 |
| $B_2O_3$: | 1 bis 15, bevorzugt 3 bis 12, |

wobei weiterhin $HfO_2$ optional bis zu 0,25 Gew.-% enthalten sein kann.

Dieses vorstehend beschriebene zumindest teilweise kristallisierte Glas ist gemäß einer weiteren Ausführungsform so ausgebildet, dass die zumindest eine Kristallphase ein Metalloxid mit einem mittelgroßen Kation und/oder vorteilhaft ein Kettensilikat umfasst. Als ein mittelgroßes Kation wird im Sinne der vorliegenden Erfindung dabei ein Kation verstanden, welches in sechsfacher, beispielsweise oktaedrischer, Koordination durch Sauerstoff einen Ionenradius zwischen 0,5 Ä und 0,9 Ä aufweist. Im Sinne der vorliegenden Offenbarung wird unter einem Metalloxid mit einem mittelgroßen Kation vorzugsweise ein Metalloxid mit mittelgroßem Kation im Sinne der Mineralklassifikation nach Strunz, 9. Auflage, verstanden. Insbesondere vom Begriff des mittelgroßen Kations umfasst ist hierbei das vierwertige Zirkonium-Ion $Zr^{4+}$.

Unter einem Kettensilikat werden solche Silikate verstanden, bei welchen die $SiO_4^{4-}$-Tetraeder eckenverknüpft in Form endloser Bänder oder Ketten vorliegen. Beispiele für solche Kettensilikate umfassen beispielsweise die Minerale der Pyroxene. Ein weiteres Beispiel für ein Kettensilikat ist Wollastonit.

Gemäß einer vorteilhaften Ausführungsform umfasst das Metalloxid $ZrO_2$ und bevorzugt zusätzlich Yttrium. Ganz besonders bevorzugt umfasst das Metalloxid Yttrium-stabilisiertes $ZrO_2$, welches am meisten bevorzugt in tetragonaler Modifikation vorliegt.

Gemäß einer nochmals weiteren Ausführungsform umfasst das Kettensilikat als silikatische Baueinheit $SiO_3^{2-}$ und ist bevorzugt als Erdalkalioxid-umfassendes Kettensilikat ausgebildet.

Dabei ist gemäß einer weiteren bevorzugten Ausführungsform das Erdalkalioxid CaO und das Kettensilikat sowie bevorzugt weiterhin Yttrium umfasst. Beispielsweise kann das Kettensilikat als Wollastonit, bevorzugt als Yttrium-umfassender Wollastonit, ausgebildet sein.

Gemäß einer nochmals weiteren Ausführungsform ist das Kettensilikat als Erdalkalioxid umfassendes Kettensilikat mit Pyroxen-Struktur ausgebildet, wobei das Erdalkalioxid bevorzugt CaO und MgO umfasst. Beispielsweise kann das Kettensilikat als Diopsid ausgebildet sein.

Weiterhin ist es gemäß einer Ausführungsform der Erfindung möglich, dass zwei unterschiedliche Kettensilikate im zumindest teilweise kristallisierten Glas umfasst sind. Beispielhaft kann das zumindest teilweise kristallisierte Glas Wollastonit bzw. Y-umfassenden Wollastonit umfassen sowie Diopsid. Ebenfalls ist es möglich, dass ein oder auch zwei Kettensilikate zusammen mit einem Metalloxid mit einem mittelgroßen Kation, beispielsweise mit $ZrO_2$, bevorzugt mit Y-dotiertem $ZrO_2$, vorliegen.

Das glaskeramische Material umfasst insbesondere ein auch zumindest nur teilweise kristallisiertes Glas, ein Glas oder eine Glaskeramik oder ein kristallisiertes Material auf Glasbasis, vorzugsweise mit einem spezifischen Durchgangswiderstand von mehr als $1,0 \times 10^{10}$ Ω cm bei einer Temperatur von 350 °C.

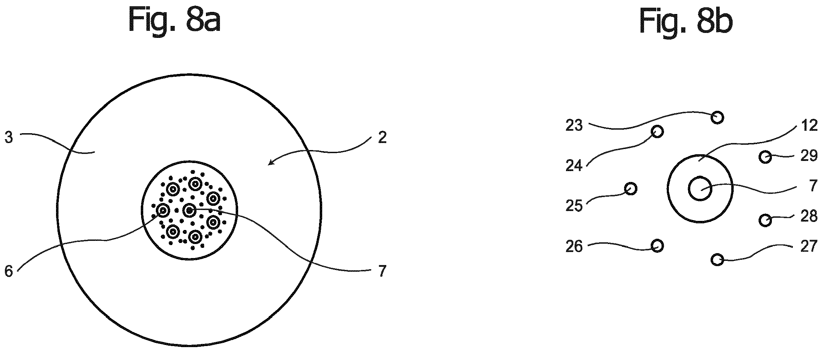

Nachfolgend werden weitere bevorzugte Ausführungsformen beschrieben und wird hierzu zunächst auf die Figuren 8a und 8b Bezug genommen.

Figur 8a zeigt eine Aufsicht auf eine Durchführung einer weiteren bevorzugten Ausführungsform in einer Richtung, welche der Richtung des Pfeils X der Figur 1 entspricht, bei welcher die Druckkompensationseinrichtung sacklochartige Öffnungen im Material des Grundkörpers 3 umfasst, welche in dieser Figur zunächst nur als schwarze Punkte zu entnehmen und deshalb nochmals in der Detailansicht der Figur 8b vergrößert dargestellt sind.

Diese sacklochartigen Öffnungen 23 bis 24 sind vorzugsweise symmetrisch zur jeweiligen zumindest einen Durchgangsöffnung 5, 6 insbesondere mit deren Längsachse auf einem die Durchgangsöffnung umgebenden Vollkreis, auf der dem Druck, insbesondere dem Außendruck, zugewandten Seite 2 des Grundkörpers 3 angeordnet.

Figur 8b zeigt eine Aufsicht auf das funktionale Element 7 der in Figur 8a gezeigten Durchführung 1 ebenfalls in der Richtung, welche der Richtung des Pfeils X der Figur 1 entspricht, bei welcher auch die das funktionale Element umgebenden sacklochartige Öffnungen 23 bis 29 im Material des Grundkörpers 3 erkennbar sind. Diese sacklochartigen Öffnungen 23 bis 29 im Material des Grundkörpers 3 können alternativ oder zusätzlich zu den vorstehend beschriebenen ringförmigen Nuten 16, 17 im Grundkörper als Druckkompensationseinrichtung angeordnet sein und erlauben eine seitlich dichtere Anordnung der jeweiligen funktionalen Elemente zueinander, insbesondere auch weil diese fertigungstechnisch einfache herstellbar sein können als sich überschneidende ringförmige Nuten.

Ferner sollten sich diese Ringnuten nicht so stark schneiden oder überschneiden, dass hierdurch ein erwünschtes Dg, somit eine erwünschte radiale Erstreckung des jeweiligen Materials des Grundkörpers innerhalb der ringförmigen Nut einer Durchgangsöffnung unterschritten oder gar verkleinert wird, etwa wie bei sich durchsetzenden Ringen, da dann die Druckfestigkeit einer Druckeinglasung in unerwünschter Weise geschädigt werden kann. Dies kann jedoch mit Verwendung der sacklochartigen Öffnungen anstelle von ringförmigen Nuten, alternierend oder in gezielter Mischung zusammen mit ringförmigen Nuten vermieden werden.

Es können die sacklochartigen Öffnungen im Material des Grundkörpers auch lokal, vorzugsweise definiert verteilt, seitliche, beispielsweise in der Ebene der Pfeile 18, 19 liegende durch den Druck, insbesondere den Außendruck erzeugte Kraftkomponenten einleiten, welche einer druckbedingten Verbiegung des Grundkörpers 3 der Durchführung 1 entgegenwirken können. Derartige sacklochförmige Öffnungen müssen nicht in der Nähe von Durchgangsöffnungen angeordnet sein, sondern können nach eigenständigen Konstruktionserfordernissen optimiert verwendet werden.

Entsprechend umfasst die konstruktive Gestaltung einer nicht in den Figuren dargestellten Ausführungsform auch eine Ausführungsform mit zumindest einer sacklochartigen Öffnung innerhalb eines funktionalen Elements, vorzugsweise axial symmetrisch zum funktionalen Element ausgerichtet, welche druckkompensierende Wirkungen in vom funktionalen Element radial nach außen gerichteter Weise bereitstellen kann.

Auch diese sacklochartige Öffnung kann sich bis zu derjenigen Tiefe erstrecken, bei welcher das das funktionale Element umgebende und die fluiddichte Verbindung herstellende Isolationsmaterial beginnt, am funktionalen Element anzuliegen oder bis zu derjenigen Tiefe erstrecken, die in etwa in der Mitte der Tiefe des das funktionale Element umgebenden und die fluiddichte Verbindung herstellenden Isolationsmaterials liegt oder auch bis zu derjenigen Tiefe erstrecken, bei welcher das das funktionale Element umgebende und die fluiddichte Verbindung herstellende Isolationsmaterial aufhört, am funktionalen Element anzuliegen oder über diejenige Tiefe hinaus erstrecken, bei welcher das das funktionale Element umgebende und die fluiddichte Verbindung herstellende Isolationsmaterial aufhört, am funktionalen Element anzuliegen.

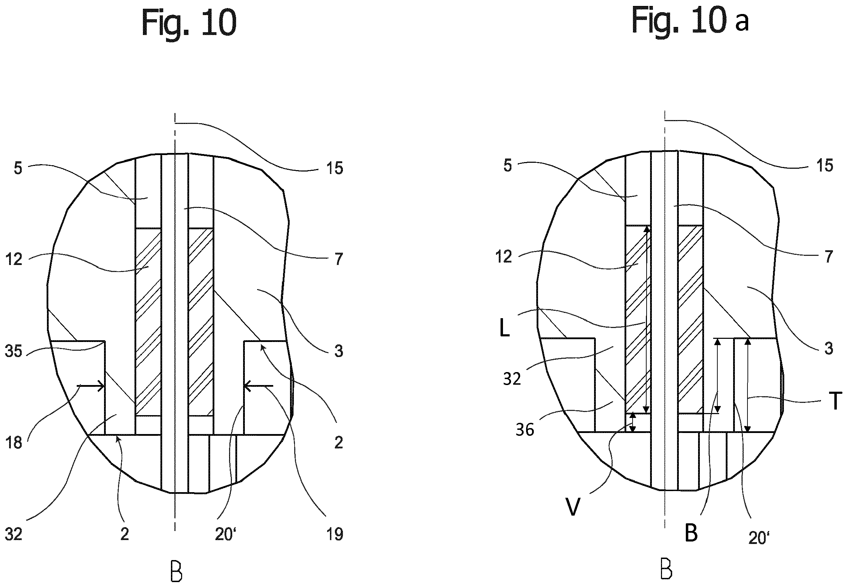

Nachfolgend wird auf die Figuren 2a und 10a Bezug genommen. Es ist jeweils zu erkennen, dass das Isolationsmaterial 12 über eine Länge L, welche auch als Einglasungslänge bezeichnet wird, sowohl am funktionalen Element 7 als auch am Grundkörper 3 anliegt.

Bei der in Figur 2a dargestellten Ausführungsform erstreckt sich die Innenwand 20 der in den Grundkörper 3 eingebrachten Nut 17 bis zu einer Tiefe T.

Bei der in Figur 10a dargestellten Ausführungsform erstreckt sich die Außenwand 20' des hervorkragenden Abschnitts 32 ebenfalls um einen Länge T in axialer Richtung vor der dem druck-, insbesondere dem außendruckzugewandten Seite 2 des Grundkörpers 3 in Längsrichtung der Durchgangsöffnung 5 hervor.

Da das Isolationsmaterial 12 jeweils um einen Versatz V relativ zu der dem druck-, insbesondere dem außendruckzugewandten Seite 2 des Grundkörpers 3 in Längsrichtung der Durchgangsöffnung 5 zurückversetzt ist, ergibt sich damit als Überlappungsbereich B der Einglasungslänge L mit der Druckkompensationseinrichtung B die folgende Gleichung solang B kleiner oder gleich L ist:

$$B = T - V$$

Der Wert für B liegt für die vorstehend beschriebenen Ausführungsformen bei 0%, 50% und 100 % der Einglasungslänge L. Weitere bevorzugte Beträge dieses Überlappungsbereichs B betragen 10%, 15%, 20% und besonders bevorzugt auch 30% der Einglasungslänge L.

In bestimmten Ausführungsformen kann die Tiefe der Nut 17 größer sein als die Einglasungslänge L. Dies hat zur Folge, dass zwischen Nut und Loch nur noch eine dünne Wand vorliegt. Prinzipiell kann bei Versagen dieser Wand ein unerwünschtes Leck entstehen. Andererseits wird die Wand nicht durch das Isolationsmaterial, z.B. das Glas gestützt. Bei Druckbeaufschlagung von Seite der Nut 17 oder der Auskragung kann es bei geeigneter Wahl des Materials für den Grundkörper zu einer Einschnürung der Wand kommen. Durch diese Verformung hinter dem Isolationsmaterial kann dieses vorteilhaft eine mechanische Unterstützung erfahren. Insbesondere sind zur Ausnutzung dieses Effekts Materialien für den Grundkörper auswählbar, die zäh verformbar sind und/oder eine gute Zugfestigkeit aufweisen.

Bei einer bevorzugten Ausführungsform wurde Edelstahl für den Grundkörper 1 verwendet und wies die Tiefe T der ringförmigen Nut 16, 17 bei einer Einglasungslänge L von 30 mm einen Wert von 5 mm auf. Die beispielsweise aus Figur 2a an einem Doppelpfeil zu erkennende und mit dem Bezugszeichen 39 versehene Nutbreite $B_N$ betrug 1 mm und wurde durch Funkenerosion in den Grundkörper 1 eingebracht.

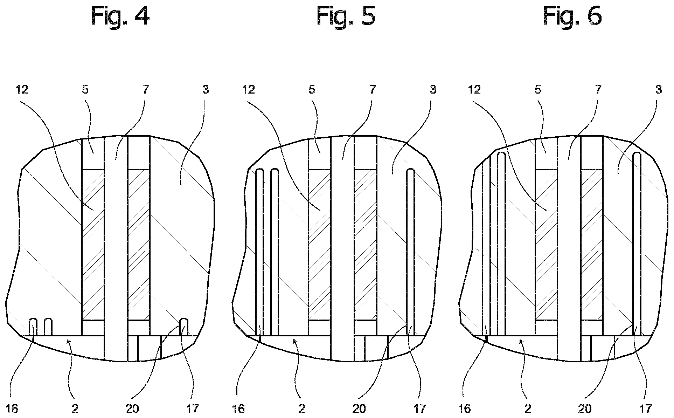

Nachfolgend wird auf Figur 4 Bezug genommen, welche eine Querschnittsdarstellung des Details A aus Figur 1 bei einer zweiten bevorzugten Ausführungsform zeigt, bei welcher die Druckkompensationseinrichtung ebenfalls jeweils eine ringförmige Nut 16, 17 umfasst oder in weiterer, in Figur 4 nicht dargestellter Weise sacklochartige Öffnungen 23 bis 29 im Material des Grundkörpers 3 enthält.

Gegenüber der vorstehend beschriebenen ersten bevorzugten Ausführungsform, bei welcher sich die Tiefe der ringförmigen Nut 16, 17 oder der sacklochartigen Öffnung 23 bis 29 bis zu derjenigen Tiefe erstreckt, die in etwa in der Mitte der Tiefe des das funktionale Element 6, 7 umgebenden und die fluiddichte Verbindung herstellenden Isolationsmaterials 12 liegt, sind die ringförmigen Nuten 16, 17 weniger tief ausgebildet.

Bei dieser zweiten bevorzugten Ausführungsform erstreckt sich die Tiefe der ringförmigen Nut 16, 17 oder der sacklochartigen Öffnung 23 bis 29 nur bis zu derjenigen Tiefe, bei welcher das das funktionale Element 6, 7 umgebende und die fluiddichte Verbindung herstellende Isolationsmaterial 12 beginnt, am Grundkörper 3 anzuliegen.

Bei der in Figur 5 dargestellten dritten bevorzugten Ausführungsform erstreckt sich die Tiefe der ringförmigen Nut 16, 17 oder der sacklochartigen Öffnung 23 bis 29 bis zu derjenigen Tiefe, bei welcher das das funktionale Element umgebende und die fluiddichte Verbindung herstellende Isolationsmaterial 12 aufhört, am Grundkörper 3 anzuliegen.

Bei der in Figur 6 dargestellten vierten bevorzugten Ausführungsform erstreckt sich die Tiefe der ringförmigen Nut 16, 17 oder der sacklochartigen Öffnung 23 bis 29 über diejenige Tiefe hinaus, bei welcher das das funktionale Element 6, 7 umgebende und die fluiddichte Verbindung herstellende Isolationsmaterial 12 aufhört, am Grundkörper 3 anzuliegen.

In Figur 9 ist eine Querschnittsdarstellung einer ersten bevorzugten Ausführungsform einer Durchführung 1 gezeigt, bei welcher sich die Schnittebene in etwa senkrecht verlaufend durch die Mitte der Durchführung 1 erstreckt und die Druckkompensationseinrichtung jeweils einen hervorkragenden Abschnitt 30 bis 34 des Grundkörpers 3 umfasst, welcher jeweils als ringförmige Erhebung ausgebildet ist.

Die ringförmigen Erhebungen sind jeweils symmetrisch zur Durchgangsöffnung 4, 5 auf der dem Druck, insbesondere dem Außendruck zugewandten Seite 2 des Grundkörpers 3 ausgebildet.

In funktional gleicher Weise wie bei den vorstehend beschriebenen Ausführungsformen werden durch Druck entstandene, insbesondere durch den Außendruck entstandene Druckanteile senkrecht zur Längsrichtung 15 der Durchgangsöffnung 5 zu Randbereichen, vorliegend zur Außenwand 20' der ringförmigen Erhebung des hervorkragenden Abschnitts 32, des die zumindest eine Durchgangsöffnung 5 umgebenden Materials des Grundkörpers 3 geleitet. Die Richtung des hierbei wirkenden Drucks ist ebenfalls mit den Pfeilen 18 und 19 dargestellt.

Diese Randbereiche, somit die Außenwand 20' der ringförmigen Erhebung des hervorkragenden Abschnitts 32 erstreckt sich dabei parallel zur Längsachse 15 der zumindest einen Durchgangsöffnung 5.

Die Kraftanteile des mit den Pfeilen 18, 19 dargestellten Drucks wirken ebenfalls den aufbiegenden Kräften des herrschenden Drucks wie vorstehend, auch unter Bezugnahme auf die Innenwand 20 der ringförmigen Nut 17 beschrieben druckkompensierend entgegen.

Folglich gelten auch die vorstehend unter Bezugnahme auf die Innenwand 20 der ringförmigen Nut 17 beschrieben angegebenen Bemaßungsregeln in gleiche Weise für den Durchmesser der Außenwand 20' des jeweiligen hervorkragenden Abschnitts 30 bis 34.

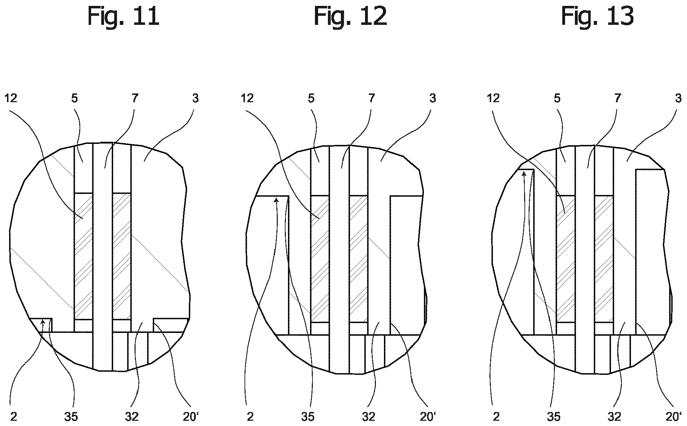

Nachfolgend wird zusätzlich zu Figur 10 auch auf die Figuren 11, 12 und 13 Bezug genommen, welche jeweils eine Querschnittsdarstellung des Details B der Figur 9 für jeweilige bevorzugte Ausführungsformen einer Durchführung 1 zeigen.

Figur 10 zeigt die erste bevorzugte Ausführungsform, bei welcher das dem Grundkörper nahe Ende 35 des hervorkragenden Abschnitts 32 in etwa auf der Hälfte der Höhe des vorzugsweise die fluiddichte Verbindung herstellenden Isolationsmaterials 12 am Grundkörper 3 endet. Figur 11 zeigt eine Querschnittsdarstellung des Details B einer zweiten bevorzugten Ausführungsform, bei welcher das dem Grundkörper nahe Ende 35 des hervorkragenden Abschnitts 32 auf der Höhe am Grundkörper 3 endet, wo das das funktionale Element 7 umgebende und die fluiddichte Verbindung herstellende Isolationsmaterial 12 beginnt, am Grundkörper 3 anzuliegen. Figur 12 zeigt eine Querschnittsdarstellung des Details B einer dritten bevorzugten Ausführungsform, bei welcher das dem Grundkörper 3 nahe Ende 35 des hervorkragenden Abschnitts 32 auf der Höhe am Grundkörper 3 endet, wo das das funktionale Element 7 umgebende und die fluiddichte Verbindung herstellende Isolationsmaterial 12 aufhört, am Grundkörper 3 anzuliegen, und Figur 13 zeigt eine Querschnittsdarstellung des Details B einer dritten bevorzugten Ausführungsform, das dem Grundkörper nahe Ende des hervorkragenden Abschnitts tiefer am Grundkörper endet als an der Stelle, an der das das funktionale Element umgebende und die fluiddichte Verbindung herstellende Isolationsmaterial aufhört, am Grundkörper anzuliegen.

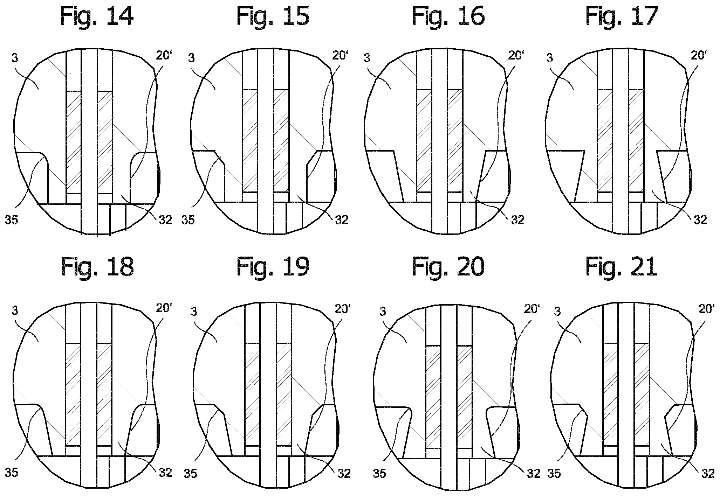

Figur 14 bis Figur 21 zeigen jeweils verschiedene Querschnittsformen des hervorkragenden Abschnitts 32.

Gemäß Figur 14 ist das dem Grundkörper 3 nahe Ende des hervorkragenden Abschnitts 32 verrundet ausgebildet.

Gemäß Figur 15 ist das dem Grundkörper 3 nahe Ende des hervorkragenden Abschnitts 32 kegelstumpfförmig ausgebildet.

Gemäß Figur 16 ist die Außenwand 20' kegelstumpfförmig ausgebildet.

Gemäß Figur 17 ist die Außenwand 20' sich trichterförmig auf den Grundkörper zu verjüngend ausgebildet.

Gemäß Figur 18 ist die Außenwand 20' kegelstumpfförmig und ist das dem Grundkörper 3 nahe Ende des hervorkragenden Abschnitts 32 verrundet ausgebildet.

Gemäß Figur 19 ist die Außenwand 20' kegelstumpfförmig und ist das dem Grundkörper 3 nahe Ende des hervorkragenden Abschnitts 32 ebenfalls kegelstumpfförmig, weist jedoch dabei eine andere Neigung auf als die Außenwand 20'.

Gemäß Figur 20 ist die Außenwand 20' sich trichterförmig auf den Grundkörper zu verjüngend und ist das dem Grundkörper 3 nahe Ende des hervorkragenden Abschnitts 32 verrundet ausgebildet.

Gemäß Figur 21 ist die Außenwand 20' sich trichterförmig auf den Grundkörper zu verjüngend und ist das dem Grundkörper 3 nahe Ende des hervorkragenden Abschnitts 32 kegelstumpfförmig ausgebildet.

In gleicher Weise wie vorstehend beschrieben und funktional gleichwirkend kann auch die Innenwand 20 der ringförmigen Nut 17 geformt sein.

Durch die mit der Tief variierende Dicke Dg können in verschiedenen Tiefen auch definiert verschiedene druckkompensierende Wirkungen erzeugt und an den jeweiligen Anwendungsfall angepasst werden.

In bevorzugter Form kann das vorstehende funktionale Element 6, 7 einen elektrischen Leiter umfassen.

Die vorstehend beschriebenen ringförmigen Nuten und/oder die sacklochartigen Öffnungen können auch mit einer Verschlussmasse, vorzugsweise einer elastischen Verschlussmasse, umfassend ein elastisches Material, insbesondere ein Polymer, eine Silikonverbindung und/oder einen Kautschuk gefüllt sein, um deren Verschmutzung oder chemischen Angriff durch vor Ort auftretende Umwelteinflüsse zu mindern.

Die erfindungsgemäße Durchführung hat den Vorteil, dass aufgrund ihres Funktionsprinzips durch die Druckkompensationseinrichtung beim Anliegen eines Außendrucks eine durch den anliegenden Druck erzeugte Klemmkraft auf das Isolationselement und/oder das Funktionselement ausgeübt und somit die Druckstabilität der Durchführung erheblich verbessert.

Bezugszeichenliste

**EP 3 420 567 B1**

1    Durchführung
2    druck-, insbesondere außendruckzugewandte Seite
3    Grundkörper
4    Durchgangsöffnung
5    Durchgangsöffnung
6    funktionales Element
7    funktionales Element
8    funktionales Element
9    funktionales Element
10   funktionales Element
11   Isolationsmaterial
12   Isolationsmaterial
13   Dicke des Grundkörpers darstellender Doppelpfeil
14   Längsrichtung oder Längsachse der Durchgangsöffnung
15   Längsrichtung oder Längsachse der Durchgangsöffnung
16   ringförmige Nut
17   ringförmige Nut
18   Pfeil der Druckrichtung
19   Pfeil der Druckrichtung
20   Innenwand der ringförmigen Nut 17
20'  Außenwand des hervorkragenden Abschnitts
21   Pfeil, welcher die radiale Erstreckung des Isolationsmaterials 11, 12 darstellt
22   Pfeil, welcher die radiale Erstreckung bis zur Innenwand 20 der Nut 17 darstellt
23   sacklochartige Öffnung
24   sacklochartige Öffnung
25   sacklochartige Öffnung
26   sacklochartige Öffnung
27   sacklochartige Öffnung
28   sacklochartige Öffnung
29   sacklochartige Öffnung
30   hervorkragender Abschnitt
31   hervorkragender Abschnitt
32   hervorkragender Abschnitt
33   hervorkragender Abschnitt
34   hervorkragender Abschnitt
35   dem Grundkörper nahes Ende des hervorkragenden Abschnitts 32
36   Randwall
37   DaAußendurchmesser der Innenwand 20 der ringförmigen Nut 16, 17 oder Außendurchmesser der Außenwand 20' des hervorkragenden Abschnitts 30 bis 34
38   Di Innendurchmesser der Durchgangsöffnung 4, 5 des Grundkörpers 3, welcher das Isolationsmaterial 11, 12 umgibt
39   Nutbreite $B_N$
40   Aussenrand des Grundkörpers 1
T    Tiefe der ringförmigen Nut 16, 17, der sacklochartigen Öffnung 23 bis 29 sowie Höhe der hervorkragenden Abschnitts 30 bis 34
L    Einglasungslänge
B    Überlappungsbereich der Druckkompensationseinrichtung mit der Einglasungslänge L
V    Versatz des Isolationsmaterials 12 in Längsrichtung der Durchgangsöffnung 4, 5 relativ druck-, insbesondere außendruckzugewandte Seite 2 des Grundkörpers 3

**Patentansprüche**

1.  Durchführung (1)

    für Anwendungen bei hohem Außendruck mit
    einem Grundkörper (3) sowie
    zumindest einer sich durch den Grundkörper (3)

17

hindurch erstreckenden Durchgangsöffnung (4, 5)
und zumindest einem Funktionselement (6, 7),
wobei das zumindest eine Funktionselement (6, 7)
innerhalb der zumindest einen
Durchgangsöffnung angeordnet ist,
wobei das zumindest eine Funktionselement (6, 7)
mit einem das funktionale Element
zumindest bereichsweise umgebenden und die fluiddichte Verbindung
herstellenden Isolationsmaterial (11, 12) mit dem
Grundkörper (3) fluiddicht verbunden ist, und
mit einer Druckkompensationseinrichtung (16, 17, 23-29, 30-34)
für die fluiddichte Verbindung des
zumindest einen Funktionselements (6, 7)
mit dem Grundkörper (3),
mittels welcher die Druckfestigkeit der fluiddichten Verbindung des zumindest einen
Funktionselements (6, 7) mit dem Grundkörper (3) gegenüber Druck erhöht ist, wobei mit außen diejenige Seite
der Durchführung gemeint ist, welcher die jeweilige Druckkompensationseinrichtung zugewandt ist,
wobei sich das Isolationsmaterial (12)
innerhalb der Durchgangsöffnung jeweils radial
bis zu deren Rand erstreckt, wobei $R_1$ diese radiale Erstreckung von der
Längsachse ausgehend darstellt, wobei die

Druckkompensationseinrichtung (16, 17, 23-29, 30-34) so eingerichtet ist, dass durch einen im Betriebszustand anliegenden Druck, insbesondere den Außendruck entstandene Druckanteile senkrecht zur Längsrichtung der Durchgangsöffnung zu Randbereichen des die zumindest eine Durchgangsöffnung umgebenden Materials des Grundkörpers geleitet sind,
und so dieser Druck radial, somit senkrecht zu einer Längs- oder Symmetrieachse einer Durchgangsöffnung
der Durchführung (1), auf das Isolationsmaterial wirkt und wobei das Material des Grundkörpers zumindest
im Bereich der Druckkompensationseinrichtung (16, 17,23-29, 30-34) durch den Druck verformbar ist, so
dass mit steigendem Druck eine steigende Klemmwirkung auf das Isolationsmaterial (11, 12) ausgeübt
wird, welche einem Aufbiegen der Durchgangsöffnung entgegen wirkt,

und mit einer ringförmigen Nut (16, 17)

im Material des Grundkörpers (3), wobei $R_2$ die radiale Erstreckung
von der Längsachse ausgehend bis zur Innenwand der ringförmigen Nut (16, 17) darstellt, wobei $R_2$ den
zehnfachen Wert von $R_1$ nicht überschreitet,

und/ oder mit einem
hervorkragenden Abschnitt (30-34) des Grundkörpers,
wobei $R_2$ die radiale Erstreckung ausgehend von der Längsachse bis zur Außenwand des hervorkragenden
Abschnitts (30-34)
darstellt und wobei
$R_2$ den zehnfachen Wert von $R_1$ nicht überschreitet,
und/oder
mit Öffnungen, vorzugsweise sacklochartigen Öffnungen (23-29)
im Material des
Grundkörpers auf der dem Außendruck zugewandten Seite des Grundkörpers, welche vorzugsweise symmetrisch zur Durchgangsöffnung, insbesondere mit deren Längsachse auf einem die Durchgangsöffnung umgebenden Vollkreis, angeordnet sind.

2. Durchführung nach Anspruch 1, wobei sich die Randbereiche schräg oder parallel zur Längsachse der zumindest
einen Durchgangsöffnung erstrecken.

3. Durchführung nach Anspruch 2, wobei die Druckkompensationseinrichtung (16,17,23-29,30-34) als am
Isolationsmaterial anliegender Randwall ausgebildet ist und durch im Betriebszustand anliegenden Druck zumindest
Bereiche des Randwalls senkrecht zur Richtung der Achse der Durchgangsöffnung gedrückt werden, wobei dabei
eine vom Betriebszustand, insbesondere vom Aussendruck, abhängige Klemmkraft auf das Isoliermaterial entsteht.

4. Durchführung nach Anspruch 1, bei welcher der hervorkragende Abschnitt (30-34) des Grundkörpers (3) als ringförmige Erhebung symmetrisch zur Durchgangsöffnung auf der dem Druck, insbesondere dem Außendruck, zugewandten Seite des Grundkörpers ausgebildet ist.

5. Durchführung nach einem der vorstehenden Ansprüche, bei welcher sich die Tiefe der ringförmigen Nut (16, 17) oder der sacklochartigen Öffnung (23-29) bis zu derjenigen Tiefe erstreckt, bei welcher das das Funktionale Element umgebende und die fluiddichte Verbindung herstellende Isolationsmaterial beginnt am Grundkörper (3) anzuliegen oder das dem Grundkörper nahe Ende des hervorkragenden Abschnitts auf der Höhe am Grundkörper endet, wo das das funktionale Element umgebende und die fluiddichte Verbindung herstellende Isolationsmaterial beginnt, am Grundkörper anzuliegen.

6. Durchführung nach einem der vorstehenden Ansprüche, bei welcher sich die Tiefe der ringförmigen Nut (16, 17) oder der sacklochartigen Öffnung (23-29) bis zu derjenigen Tiefe erstreckt, bei welcher das das funktionale Element umgebende und die fluiddichte Verbindung herstellende Isolationsmaterial aufhört, am Grundkörper (3) anzuliegen oder
das dem Grundkörper nahe Ende des hervorkragenden Abschnitts auf der Höhe am Grundkörper endet, wo das das funktionale Element umgebende und die fluiddichte Verbindung herstellende Isolationsmaterial aufhört, am Grundkörper anzuliegen.

7. Durchführung nach einem der vorstehenden Ansprüche, bei welcher sich die Tiefe der ringförmigen Nut (16, 17) oder der sacklochartigen Öffnung (23-29) über diejenige Tiefe hinaus erstreckt, bei welcher das das funktionale Element umgebende und die fluiddichte Verbindung herstellende Isolationsmaterial aufhört, am Grundkörper (3) anzuliegen oder
das dem Grundkörper nahe Ende des hervorkragenden Abschnitts tiefer am Grundkörper endet als an der Stelle, an der das das funktionale Element umgebende und die fluiddichte Verbindung herstellende Isolationsmaterial aufhört, am Grundkörper anzuliegen.

8. Durchführung nach einem der vorstehenden Ansprüche, bei welcher sich die Tiefe der ringförmigen Nut (16, 17) oder der sacklochartigen Öffnung (23-29) bis zu derjenigen Tiefe erstreckt, die in etwa in der Mitte der Tiefe des das funktionale Element umgebenden und die fluiddichte Verbindung herstellenden Isolationsmaterials Isolationsmaterial (11, 12) liegt oder
das dem Grundkörper (3) nahe Ende des hervorkragenden Abschnitts in etwa auf der Hälfte der Höhe des vorzugsweise die fluiddichte Verbindung herstellenden Isolationsmaterials am Grundkörper endet.

9. Durchführung nach einem der vorstehenden Ansprüche, bei welchem das funktionale Element einen elektrischen Leiter umfasst.

10. Durchführung nach einem der vorstehenden Ansprüche, bei welcher das vorzugsweise die fluiddichte Verbindung herstellende Isolationsmaterial (11, 12) Glas und/oder glaskeramisches Material und/oder keramisches Material umfasst, und die Durchführung vorzugsweise eine Druckeinglasung umfasst, bei welcher das Glas und/oder das glaskeramisches Material und/oder das keramische Material mit dem Grundkörper und dem funktionalen Element jeweils zumindest bereichsweise fluiddicht verbunden ist.

11. Durchführung für Anwendungen bei hohem Außendruck, nach einem der vorstehenden Ansprüche, bei welcher $D_A$, den Außendurchmesser der Innenwand (20) der ringförmigen Nut (16, 17) oder den Außendurchmesser der Außenwand (20') des hervorkragenden Abschnitts (30 bis 34) bezeichnet und Di den Durchmesser des Isolationsmaterials (11, 12) und somit insbesondere den Durchmesser der Durchgangsöffnung (4, 5) angibt, und das Verhältnis von $D_A$/Di einen bevorzugten Wert in einem Bereich von $D_A$/Di kleiner oder gleich 2 bis größer oder gleich 1,05 aufweist, einen besonders bevorzugter Wert für das Verhältnis $D_A$/Di von kleiner oder gleich 1,6 bis größer oder gleich 1,10 aufweist und der bevorzugteste Wert des Verhältnisses $D_A$/Di in einem Bereich von kleiner oder gleich 1,35 bis größer oder gleich 1,15 liegt.

12. Durchführung für Anwendungen bei hohem Außendruck, nach einem der vorstehenden Ansprüche, bei welcher ein Überlappungsbereich B der Druckkompensationseinrichtung mit der Einglasungslänge L des Isolationsmaterials (12) in Längsrichtung der Durchgangsöffnung (4, 5) einen Wert von 0%, 50% oder 100 % der Einglasungslänge L aufweist und weitere bevorzugte Beträge dieses Überlappungsbereichs B 10%, 15%, 20% und besonders bevorzugt auch 30% der Einglasungslänge L betragen.

13. Durchführung für Anwendungen bei hohem Außendruck, nach einem der vorstehenden Ansprüche, **dadurch gekennzeichnet, dass** das Isolationsmaterial (11, 12) um einen Versatz (V) relativ zu der dem Außendruck zugewandten Seite des Grundkörpers (3), welche symmetrisch zur Durchgangsöffnung angeordnet ist, in Längsrichtung der Durchgangsöffnung zurückversetzt ist.

14. Verfahren zur Herstellung einer Durchführung für Anwendungen bei hohem Außendruck,

nach einem der vorstehenden Ansprüche von 1 bis 13, bei welchem an einem Grundkörper (3) der Durchführung eine Druckkompensationseinrichtung (16, 17, 23-29, 30-34) ausgebildet wird, mittels welcher die Druckfestigkeit der Durchführung erhöht wird, wobei für die Ausbildung der Druckkompensationseinrichtung Material des Grundkörpers in der Nähe der Durchgangsöffnung auf der druckzugewandten Seite des Grundkörpers vermindert, insbesondere materialabtragend vermindert wird, und wobei vorzugsweise das Material des Grundkörpers zur Ausbildung einer Ringnut, einer sacklochartigen Bohrung oder zur Ausbildung eines hervorragenden Abschnitts vermindert, insbesondere materialabtragend vermindert wird.

15. Verwendung einer Durchführung nach einem der Ansprüche von 1 bis 13 für Einrichtungen in der Tiefsee und/oder Erdöl- und/oder Erdgasförder- oder Explorationsvorrichtung, und/oder für Einrichtungen

in chemisch oder strahlungsbelasteten Umgebungen, wie beispielsweise in der chemischen Industrie oder in der Energieanlagen- und Reaktortechnik, insbesondere in explosionsgefährdeten Bereichen, in einer Energieerzeugungs- oder Energiespeichervorrichtung mit einem Gehäuse, oder in einer Kapselung einer Energieerzeugungsvorrichtung oder einer Energiespeichervorrichtung oder eines Reaktors oder einer Speichervorrichtung von toxischer und/oder schädlicher Materie, insbesondere als Durchführungseinrichtung innerhalb des Containments eines Reaktors oder Durchführungseinrichtung durch das Containment eines Reaktors, insbesondere eines chemischen oder Kernreaktors, oder in einem Raumfahrzeug oder Raumfahrt-Erkundungsfahrzeug, oder in bemannten und unbemannten Wasserfahrzeugen, beispielsweise Tauchrobotern und U-Booten, insbesondere für die Verbindung von Sende- und/oder Empfangseinrichtungen, und/oder in einem Gehäuse eines Sensors und/oder Aktuators, oder in Gastanks, insbesondere $CO_2$-Lager oder $H_2$-Tanks oder LNG-Tanks, oder vorzugsweise auch für Kraftfahrzeuge mit Brennstoffzellen oder Hochdruckeinspritzanlagen wie Common Rail, oder besonders bevorzugt in Maschinen wie Pressen oder hydraulischen Anlagen und/oder Vorrichtungen.

## Claims

1. A feed-through (1) for applications under high external pressure, comprising

a base body (3); and
at least one through-hole (4, 5) extending through said base body (3); and
at least one functional element (6, 7);
wherein the at least one functional element (6, 7) is arranged inside the at least one through-hole;
wherein the at least one functional element (6, 7) is joined to the base body (3) in fluid-tight manner through an insulating material (11, 12) which surrounds the functional element at least in sections thereof and establishes the fluid-tight join; and comprising
pressure compensation means (16, 17, 23 - 29, 30 - 34) for the fluid-tight join of the at least one functional element (6, 7) with the base body (3), which enhances the pressure resistance of the fluid-tight join of the at least one functional element (6, 7) with the base body (3) against pressure;
external meaning that side of the feed-through which faces the respective pressure compensation means;
wherein the respective insulating material (12) inside the through-hole extends radially as far as to the edge thereof, wherein $R_1$ represents this radial extent starting from the longitudinal axis;
wherein the pressure compensation means (16, 17, 23 - 29, 30 - 34) is adapted so that a pressure applied under operating conditions, in particular pressure components established by the external pressure perpendicular to the longitudinal extension of the through-hole, are directed to peripheral regions of the material of the base body surrounding the at least one through-hole, and so that this pressure is acting radially on the insulating material, that is perpendicular to a longitudinal axis or axis of symmetry of a through-hole of the feed-through (1), and wherein the material of the base body is deformable by the pressure, at least in the vicinity of the pressure compensation means (16, 17, 23 - 29, 30 - 34), so that with increasing pressure an increasing clamping effect is exerted on the insulating material (11, 12), which counteracts a widening of the through-hole; and comprising an annular groove (16, 17) in the material of the base body (3), wherein $R_2$ represents the radial extent from the longitudinal axis to the inner surface of the annular groove (16, 17); wherein $R_2$ does not exceed ten times the value of Ri; and/or comprising a protruding portion (30, 34) of the base body, wherein $R_2$ represents the radial extent from the longitudinal axis to the outer surface of the protruding portion (30, 34), and wherein $R_2$ does not exceed ten times the value of $R_1$; and/or comprising openings, preferably blind hole-type openings (23 - 29), in the material of the base body on the side of the base body facing the external pressure, which are preferably arranged symmetrically relative to the through-hole, in particular with their longitudinal axes on a full circle surrounding the through-hole.

2. The feed-through according to claim 1, wherein said peripheral regions extend obliquely or in parallel relative to the longitudinal axis of the at least one through-hole.

3. The feed-through according to claim 2, wherein the pressure compensation means (16, 17, 23 - 29, 30 - 34) is in the form of a peripheral wall abutting against the insulating material, and wherein at least portions of said peripheral wall are pressed perpendicular to the direction of the axis of the through-hole by the pressure applied under operating conditions, thereby producing a clamping force on the insulating material, which depends on the operating condition, in particular the external pressure.

4. The feed-through according to claim 1, wherein the protruding portion (30, 34) of the base body (3) is in the form of an annular elevation symmetric relative to the through-hole, on the side of the base body facing the pressure, in particular the external pressure.

5. The feed-through according to any one of the preceding claims, wherein the depth of the annular groove (16, 17) or of the blind hole-type opening (23 - 29) extends to that depth at which the insulating material surrounding the functional element and establishing the fluid-tight join begins to abut against the base body (3); or wherein the end of the protruding portion proximal to the base body terminates at that level on the base body, where the insulating material surrounding the functional element and establishing the fluid-tight join begins to abut against the base body.

6. The feed-through according to any one of the preceding claims, wherein the depth of the annular groove (16, 17) or of the blind hole-type opening (23 - 29) extends to that depth at which the insulating material surrounding the functional element and establishing the fluid-tight join stops to abut against the base body (3); or wherein the end of the protruding portion proximal to the base body terminates at that level on the base body, where the insulating material surrounding the functional element and establishing the fluid-tight join stops to abut against the base body.

7. The feed-through according to any one of the preceding claims, wherein the depth of the annular groove (16, 17) or of the blind hole-type opening (23 - 29) extends beyond that depth at which the insulating material surrounding the functional element and establishing the fluid-tight join stops to abut against the base body (3); or wherein the end of the protruding portion proximal to the base body terminates lower on the base body than at the point where the insulating material surrounding the functional element and establishing the fluid-tight join stops to abut against the base body.

8. The feed-through according to any one of the preceding claims, wherein the depth of the annular groove (16, 17) or of the blind hole-type opening (23 - 29) extends to that depth which is approximately in the middle of the depth of the insulating material (11, 12) surrounding the functional element and establishing the fluid-tight join; or wherein the end of the protruding portion proximal to the base body (3) terminates approximately at half the height of the insulating material which preferably establishes the fluid-tight join on the base body.

9. The feed-through according to any one of the preceding claims, wherein the functional element comprises an electrical conductor.

10. The feed-through according to any one of the preceding claims, wherein the insulating material (11, 12) preferably establishing the fluid-tight join comprises glass and/or glass-ceramic material and/or ceramic material; and wherein the feed-through preferably comprises a compression glass seal in which the glass and/or the glass-ceramic material and/or the ceramic material is joined to the base body and to the functional element in fluid-tight manner, at least in sections thereof.

11. The feed-through for applications under high external pressure according to any one of the preceding claims, wherein $D_A$ designates the outer diameter of the inner surface (20) of the annular groove (16, 17) or the outer diameter of the outer surface (20') of the protruding portion (30 to 34), and $D_i$ designates the diameter of the insulating material (11, 12) and thus in particular the diameter of the through-hole (4, 5);
and wherein the ratio $D_A/D_i$ has a preferred value ranging from a $D_A/D_i$ of less than or equal to 2 to greater than or equal to 1.05, a particularly preferred value of the ratio $D_A/D_i$ ranging from less than or equal to 1.6 to greater or equal to 1.10, and a most preferred value of the ratio $D_A/D_i$ ranging from less than or equal to 1.35 to greater than or equal to 1.15.

12. The feed-through for applications under high external pressure according to any one of the preceding claims, wherein a range of overlap B between the pressure compensation means and a glass seal length L of the insulating material (12) in the longitudinal direction of the through-hole (4, 5) amounts to 0 %, 50 % or 100 % of the length L of the glass seal; and wherein other preferred amounts of said range of overlap B are 10 %, 15 %, 20 % and particularly preferably 30 % of the glass seal length L.

13. The feed-through for applications under high external pressure according to any one of the preceding claims, **characterized in that** the insulating material (11, 12) is set back in the longitudinal direction of the through-hole by an offset (V) relative to the side of the base body (3) facing the external pressure, which is arranged symmetrically relative to the through-hole.

14. A method for producing a feed-through for applications under high external pressure according to any one of the preceding claims 1 to 13, wherein a pressure compensation means (16, 17, 23 - 29, 30 - 34) is provided on a base body (3) of the feed-through, which enhances pressure resistance of the feed-through, wherein for providing the pressure compensation means, material of the base body is reduced in the vicinity of the through-hole on the pressure-facing side of the base body, in particular in a material-removing manner; and wherein, preferably, the material of the base body is reduced, in particular reduced in a material-removing manner, so as to form an annular groove or a blind hole-type bore, or so as to form a protruding portion.

15. Use of a feed-through according to any one of claims 1 to 13

for deep-water facilities and/or for extraction or exploration equipment of oil and/or natural gas; and/or for facilities in environments that are contaminated chemically or by radiation, such as in the chemical industry or in energy plant technology and reactor technology, in particular in potentially explosive areas;
in a power generation appliance or energy storage appliance having a housing; or
in an encapsulation of a power generation appliance or energy storage appliance or of a reactor or of a storage device for toxic and/or harmful matter, in particular as a feed-through means within a containment of a reactor or a feed-through means through the containment of a reactor, in particular of a chemical or nuclear reactor; or
in a spacecraft or space exploration vehicle, or in manned and unmanned watercraft, such as diving robots and submarines, in particular for connecting transmitter and/or receiver devices; and/or
in a housing of a sensor and/or actuator, or in gas tanks, in particular $CO_2$ storage tanks or $H_2$ tanks or LNG tanks, or preferably also for motor vehicles comprising fuel cells, or high-pressure injection systems such as common rail systems;
or particularly preferably in machines such as presses or hydraulic equipment and/or devices.

**Revendications**

1. Traversée (1) pour applications à pression extérieure élevée, comprenant

un corps de base (3) ainsi que
au moins une ouverture de passage (4, 5) s'étendant à travers le corps de base (3)
et au moins un élément fonctionnel (6, 7), l'élément fonctionnel (6, 7), au nombre d'au moins un, étant disposé à l'intérieur de l'ouverture de passage, au nombre d'au moins une, l'élément fonctionnel (6, 7), au nombre d'au moins un, étant relié de manière étanche aux fluides au corps de base (3) par un matériau isolant (11, 12) qui entoure au moins par portions l'élément fonctionnel et établit la liaison étanche aux fluides, et comprenant

un dispositif de compensation de pression (16, 17, 23 à 29, 30 à 34) pour la liaison étanche aux fluides de l'élément fonctionnel (6, 7), au nombre d'au moins un, au corps de base (3), dispositif par lequel la résistance à la pression de la liaison étanche aux fluides de l'élément fonctionnel (6, 7), au nombre d'au moins un, avec le corps de base (3) est augmentée vis-à-vis de la pression, le terme « extérieur » désignant le côté de la traversée vers lequel est tourné le dispositif de compensation de pression respectif, le matériau isolant (12) s'étendant à l'intérieur de l'ouverture de passage, respectivement radialement jusqu'au bord de celle-ci, $R_1$ représentant cette dimension radiale en partant de l'axe longitudinal, le dispositif de compensation de pression (16, 17, 23 à 29, 30 à 34) étant agencé de manière à ce que des parts de pression engendrées par une pression appliquée à l'état de fonctionnement, notamment la pression extérieure, soient dirigées vers des zones de bord du matériau du corps de base entourant l'ouverture de passage, au nombre d'au moins une, perpendiculairement à la direction longitudinale de l'ouverture de passage, et qu'ainsi cette pression agisse sur le matériau isolant dans le sens radial et donc perpendiculairement à un axe longitudinal ou de symétrie d'une ouverture de passage de la traversée (1), et le matériau du corps de base pouvant être déformé par la pression au moins dans la région du dispositif de compensation de pression (16, 17, 23 à 29, 30 à 34), de sorte qu'à mesure que la pression augmente, une action de serrage croissante est exercée sur le matériau isolant (12), laquelle s'oppose à l'écartement de l'ouverture de passage,

et comprenant une rainure annulaire (16, 17) dans le matériau du corps de base (3), $R_2$ désignant la dimension radiale depuis l'axe longitudinal jusqu'à la paroi intérieure de la rainure annulaire (16, 17), où $R_2$ ne dépasse pas dix fois la valeur de R1,

et/ou comprenant une partie saillante (30 à 34) du corps de base, où $R_2$ représente la dimension radiale depuis l'axe longitudinal jusqu'à la paroi extérieure de la partie saillante (30 à 34), et où $R_2$ ne dépasse pas dix fois la valeur de $R_1$,

et/ou comprenant des ouvertures, de préférence des ouvertures (23 à 29) en forme de trous borgnes dans le matériau du corps de base, sur le côté du corps de base qui est tourné vers la pression extérieure, lesquelles sont de préférence disposées de façon symétrique par rapport à l'ouverture de passage, notamment avec leur axe longitudinal sur un cercle complet entourant l'ouverture de passage.

2. Traversée selon la revendication 1, dans laquelle les zones de bord s'étendent en biais ou parallèlement à l'axe longitudinal de l'ouverture de passage, au nombre d'au moins une.

3. Traversée selon la revendication 2, dans laquelle le dispositif de compensation de pression (16, 17, 23 à 29, 30 à 34) est réalisé en tant que bourrelet de bord appliqué contre le matériau isolant (12) et, du fait de la pression appliquée à l'état de fonctionnement, au moins des parties du bourrelet de bord sont pressées perpendiculairement à la direction de l'axe de l'ouverture de passage, engendrant ainsi une force de serrage qui dépend de l'état de fonctionnement, notamment de la pression extérieure, et qui agit sur le matériau isolant (12).

4. Traversée selon la revendication 1, dans laquelle la partie saillante (30 à 34) du corps de base (3) est réalisée comme proéminence annulaire, de façon symétrique par rapport à l'ouverture de passage, sur le côté du corps de base tourné vers la pression, notamment la pression extérieure.

5. Traversée selon une des revendications précédentes, dans laquelle la profondeur de la rainure annulaire (16, 17) ou de l'ouverture (23 à 29) en forme de trou borgne s'étend jusqu'à la profondeur à laquelle le matériau isolant qui entoure l'élément fonctionnel et établit la liaison étanche aux fluides commence à être appliqué contre le corps de base (3), ou à laquelle l'extrémité de la partie saillante qui est proche du corps de base se termine à la hauteur sur le corps de base où le matériau isolant qui entoure l'élément fonctionnel et établit la liaison étanche aux fluides commence à être appliqué contre le corps de base.

6. Traversée selon une des revendications précédentes, dans laquelle la profondeur de la rainure annulaire (16, 17) ou de l'ouverture (23 à 29) en forme de trou borgne s'étend jusqu'à la profondeur à laquelle le matériau isolant qui entoure l'élément fonctionnel et établit la liaison étanche aux fluides cesse d'être appliqué contre le corps de base (3), ou

l'extrémité de la partie saillante qui est proche du corps de base se termine à la hauteur sur le corps de base où le matériau isolant qui entoure l'élément fonctionnel et établit la liaison étanche aux fluides cesse d'être appliqué contre le corps de base.

7. Traversée selon une des revendications précédentes, dans laquelle la profondeur de la rainure annulaire (16, 17) ou de l'ouverture (23 à 29) en forme de trou borgne s'étend au-delà de la profondeur à laquelle le matériau isolant qui entoure l'élément fonctionnel et établit la liaison étanche aux fluides cesse d'être appliqué contre le corps de base (3), ou
l'extrémité de la partie saillante qui est proche du corps de base se termine plus bas sur le corps de base que l'endroit où le matériau isolant qui entoure l'élément fonctionnel et établit la liaison étanche aux fluides cesse d'être appliqué contre le corps de base.

8. Traversée selon une des revendications précédentes, dans laquelle la profondeur de la rainure annulaire (16, 17) ou de l'ouverture (23 à 29) en forme de trou borgne s'étend jusqu'à la profondeur qui se situe à peu près au milieu de la profondeur du matériau isolant (11, 12) qui entoure l'élément fonctionnel et établit la liaison étanche aux fluides, ou
l'extrémité de la partie saillante qui est proche du corps de base (3) se termine à peu près à la moitié de la hauteur du matériau isolant qui établit de préférence la liaison étanche aux fluides sur le corps de base (3).

9. Traversée selon une des revendications précédentes, dans laquelle l'élément fonctionnel comprend un conducteur électrique.

10. Traversée selon une des revendications précédentes, dans laquelle le matériau isolant (11, 12) qui établit de préférence la liaison étanche aux fluides comprend du verre et/ou un matériau vitrocéramique et/ou un matériau céramique, et l'ouverture de passage comprend de préférence un scellement au verre résistant à la pression où le verre et/ou le matériau vitrocéramique et/ou le matériau céramique sont respectivement liés de manière étanche aux fluides, au moins dans certaines zones, au corps de base et à l'élément fonctionnel.

11. Traversée pour des applications à pression extérieure élevée, selon une des revendications précédentes, dans laquelle $D_A$ désigne le diamètre extérieur de la paroi intérieure (20) de la rainure annulaire (16, 17) ou le diamètre extérieur de la paroi extérieure (20') de la partie saillante (30 à 34), et Di désigne le diamètre du matériau isolant (12) et donc notamment le diamètre de l'ouverture de passage (4, 5),
et le rapport de $D_A$/Di présente une valeur préférée comprise dans une plage allant de $D_A$/Di inférieur ou égal à 2 jusqu'à supérieur ou égal à 1,05, une valeur particulièrement préférée pour le rapport $D_A$/Di qui est inférieure ou égale à 1,6 jusqu'à supérieure ou égale à 1,10, et la valeur nettement préférée du rapport $D_A$/Di est comprise dans une plage allant d'inférieur ou égal à 1,35 jusqu'à supérieur ou égal à 1,15.

12. Traversée pour des applications à pression extérieure élevée, selon une des revendications précédentes, dans laquelle une zone de chevauchement B du dispositif de compensation de pression avec la longueur de scellement au verre L du matériau isolant (12), dans la direction longitudinale de l'ouverture de passage (4, 5), présente une valeur de 0 %, 50 % ou 100 % de la longueur de scellement au verre L, et d'autres valeurs préférées de cette zone de chevauchement B sont 10 %, 15 %, 20 % et, de manière particulièrement préférée également 30 % de la longueur de scellement au verre.

13. Traversée pour des applications à pression extérieure élevée, selon une des revendications précédentes, **caractérisée en ce que** le matériau isolant (11, 12) est placé en retrait, dans la direction longitudinale de l'ouverture de passage, d'un décalage (V) par rapport au côté du corps de base (3) qui est tourné vers la pression extérieure et est disposé de façon symétrique par rapport à l'ouverture de passage.

14. Procédé de fabrication d'une traversée pour des applications à pression extérieure élevée, selon une des revendications précédentes 1 à 13, selon lequel un dispositif de compensation de pression (16, 17, 23 à 29, 30 à 34) est réalisé sur un corps de base (3) de la traversée, dispositif qui a pour effet d'augmenter la résistance à la pression de la traversée, sachant que pour la réalisation du dispositif de compensation de pression, le matériau du corps de base est réduit, notamment par enlèvement de matière, à proximité de l'ouverture de passage, sur le côté du corps de base tourné vers la pression, et sachant que le matériau du corps de base est de préférence réduit, notamment par enlèvement de matière, aux fins de réaliser une rainure annulaire ou un alésage en forme de trou borgne, ou aux fins de réaliser une partie saillante.

15. Utilisation d'une traversée selon une des revendications 1 à 13, pour des installations en mer profonde et/ou des dispositifs d'extraction ou d'exploration de pétrole et/ou de gaz naturel et/ou pour des installations dans des environnements exposés à des produits chimiques ou des radiations, par exemple dans l'industrie chimique ou la technologie des installations énergétiques ou des réacteurs, notamment dans des zones à risque d'explosion, dans un dispositif de production d'énergie ou de stockage d'énergie doté d'un boîtier, ou dans une enveloppe antidéflagrante d'un dispositif de production d'énergie ou d'un dispositif de stockage d'énergie ou d'un réacteur ou d'un dispositif de stockage de matières toxiques et/ou nocives, notamment en tant que dispositif de traversée à l'intérieur de l'enceinte de confinement d'un réacteur ou en tant que dispositif de traversée à travers l'enceinte de confinement d'un réacteur, notamment d'un réacteur chimique ou nucléaire, ou dans un vaisseau spatial ou un véhicule d'exploration spatiale, ou dans des véhicules aquatiques à équipage ou non, par exemple des robots de plongée et des sous-marins, notamment pour le raccordement de dispositifs émetteurs et/ou récepteurs, et/ou dans un boîtier d'un capteur et/ou d'un actionneur ou dans des réservoirs de gaz, notamment des dispositifs de stockage de $CO_2$ ou des réservoirs de $H_2$ ou des réservoirs GNL, ou de préférence également pour des véhicules à moteur équipés de piles à combustible ou d'installations d'injection à haute pression, telles que Common Rail, ou notamment de préférence dans des machines telles que des presses ou des installations et/ou des dispositifs hydrauliques.

Fig. 1

# Fig. 2

A

# Fig. 2 a

A

EP 3 420 567 B1

# Fig. 3

EP 3 420 567 B1

Fig. 6   Fig. 5   Fig. 4

## Fig. 7a

## Fig. 7c

## Fig. 7b

EP 3 420 567 B1

Fig. 8b

Fig. 8a

# Fig. 9

EP 3 420 567 B1

Fig. 10 a

Fig. 10

Fig. 11

Fig. 12

Fig. 13

Fig. 14  Fig. 15  Fig. 16  Fig. 17
Fig. 18  Fig. 19  Fig. 20  Fig. 21

**IN DER BESCHREIBUNG AUFGEFÜHRTE DOKUMENTE**

**In der Beschreibung aufgeführte Patentdokumente**

- US 4797117 A
- EP 1050912 A
- US 20060179950 A1
- DE 102006054843 A1
- WO 2012167921 A1
- DE 1490508 A
- DE 2263222 A
- DE 1490333 A
- US 4213004 A
- DE 1665564 A